# FASCICULE DE BREVET EUROPEEN

(11) **EP 1 912 716 B1**
(45) Date de publication et mention de la délivrance du brevet: **01.04.2015**
(21) Numéro de dépôt: 06794211.0
(22) Date de dépôt: 25.07.2006
(51) Int. Cl.: B01D 15/18

(54) **PROCEDE ET DISPOSITIF DE SEPARATION DE FRACTIONS D'UN MELANGE**
VERFAHREN UND VORRICHTUNG ZUR TRENNUNG VON FRAKTIONEN EINER MISCHUNG
METHOD AND DEVICE FOR SEPARATING FRACTIONS OF A MIXTURE

(30) Priorité: 26.07.2005 FR 0507952
(43) Date de publication de la demande: 23.04.2008
(73) Titulaire: Novasep Process, 54340 Pompey (FR)
(72) Inventeur: VALERY, Eric, F-54425 Pulnoy (FR); LUDEMANN-HOMBOURGER, Olivier, F-54340 Pompey (FR)
(74) Mandataire: Hirsch & Associés
(86) Numéro de dépôt international: PCT/FR2006/001812
(87) Numéro de publication internationale: WO 2007/012750

(56) Documents cités:
- EP-A- 0 279 946
- EP-A- 0 877 936
- EP-A- 0 981 399
- US-A- 4 274 967
- DATABASE WPI Section Ch, Week 200235 Derwent Publications Ltd., London, GB; Class J01, AN 2002-305366 XP002383912 & CN 1 327 867 A (UNIV ZHEJIANG) 26 décembre 2001 (2001-12-26)

## Description

La présente invention concerne un procédé et un dispositif de séparation de fractions d'un mélange, par chromatographie.

La chromatographie est une méthode de séparation basée sur la différence de distribution des composés d'un mélange entre une phase mobile et une phase stationnaire. Les composés sont séparés en percolant un solvant liquide, gazeux ou supercritique dans un dispositif (une colonne) rempli de phase stationnaire.

Cette méthode est mise en oeuvre comme technique d'analyse afin d'identifier et de quantifier les composés d'un mélange. Elle peut également être mise en oeuvre comme technique de séparation ou de purification.

Selon les besoins, différents procédés chromatographiques sont employés pour réaliser la purification de molécules. Quelques-uns sont décrits dans la publication P.C. Wankat, Large scale Adsorption and Chromatography, CRC. press, Boca-Raton, 1986, dans la publication M.D. Le VAN DER LELY, G. Carta, C. Yon, Perry's Handbook Eng., Ed. 7, Mac-Graw-Hill, N-1, 1997, ou dans la publication de R. M. NICOUD et M. BAILLY, Choice and optimization of operating mode in industrial chromatography, Proceeding of the 9th International Symposium on preparative and industrial chromatography, PREP 92, April 1992, Nancy, p. 205-220.

Une possibilité de procédé chromatographique est le procédé « batch ». Ce procédé est basé sur l'injection discontinue du mélange à purifier dans une colonne remplie de la phase stationnaire adaptée. La phase est percolée avec un éluant assurant la migration et la séparation des produits dans la colonne. Les produits séparés sont collectés en sortie de colonne. Les injections peuvent se répéter en s'assurant que le temps entre deux injections permette de conserver la séparation entre injections successives.

Une variante du procédé « batch » consiste en des recyclages des fractions non purifiées ; les fractions non purifiées sont alors réinjectées en entrée de colonne. Injection et phases de recyclages sont alors alternées périodiquement.

L'inconvénient de ce procédé « batch » est qu'il est peu performant en terme de productivité. Cette productivité est généralement faible et les produits purifiés sont très dilués dans l'éluant.

Une autre possibilité de procédé chromatographique est basée sur le principe d'un contre-courant à 4 zones en Lit Mobile Vrai (ou « True Moving Bed » en anglais) où dans un système à lit mobile en vue d'un effet à contre-courant continu, les phases solides et éluantes circulent en continu à contre-courant dans une boucle fermée devant des points fixes d'introduction de charge et d'éluant en alternance avec des points fixes de soutirage d'un raffinat et d'un extrait.

Pour le fonctionnement en Lit Mobile Vrai, un contact à contre-courant entre les phases liquides et solides est réalisé dans un dispositif qui peut être divisée en 4 zones différentes :
- Zone 1 : tout ce qui se situe entre les lignes d'injection d'éluant et de soutirage d'extrait ;
- Zone 2 : tout ce qui se situe entre les lignes de soutirage d'extrait et d'injection de charge ;
- Zone 3 : tout ce qui se situe entre les lignes d'injection de charge et de soutirage de raffinat ;
- Zone 4 : tout ce qui se situe entre les lignes de soutirage de raffinat et d'injection d'éluant.

Du fait des débits d'entrées/sorties, le débit de liquide varie suivant la zone Q1, Q2, Q3, Q4 étant les débits respectifs dans les zones 1, 2, 3 et 4, le débit de solide étant constant.

En 1961, la Compagnie UOP a breveté un procédé permettant de simuler le mouvement du solide par une connexion astucieuse entre les colonnes interconnectées dans une boucle fermée, (US Patent 2 985 589 et US 3 291 726, 3 268 605). Ce procédé, appelé Lit Mobile Simulé (LMS) en français ou « Simulated Moving Bed » (SMB) en langue anglaise, permet alors de réaliser pratiquement le Lit Mobile Vrai. Il est caractérisé en ce que l'on fait avancer périodiquement vers l'aval (dans le sens de circulation du fluide principal) les points d'introduction de charge et d'éluant alors que l'on fait avancer simultanément et selon un même incrément (au moins une colonne par exemple) les points de soutirage d'un raffinat et d'un extrait. Le fonctionnement est en mode synchrone. Toutes les lignes d'entrée et de sortie sont donc déplacées simultanément à chaque période ΔT et le temps du cycle, temps au bout duquel elles retrouvent leur position initiale est égal à Nc x ΔT, Nc étant le nombre total de colonnes. Dans les systèmes LMS ou SMB en anglais, l'injection aux lignes d'entrée et le soutirage aux lignes de sortie sont réalisés de manière continue. Le débit de la ligne d'extrait est par principe strictement inférieur au débit en zone I, de sorte que le débit en zone II soit non nul, de même, le débit de raffinat est strictement inférieur au débit en zone III de sorte que le débit en zone IV soit non nul. Le Lit Mobile Simulé est par exemple connu du document US-A-2 985 589.

Des variantes de SMB à 5 zones sont décrites dans le document Separation Science and Technology, Volume 2, chapitre 13 : Simulated Moving Bed chromatography for biomolecules, R.M Nicoud. Elles ont en commun un déplacement synchrone des lignes d'entrées sorties ainsi qu'une injection en continue de la charge à traiter.

Une autre possibilité de procédé chromatographique est le procédé de séparation par chromatographie en Lit Mobile Simulé avec correction de volume mort par désynchronisation des périodes. Ce procédé est décrit dans le document FR-A-2 721 528.

Dans ce procédé on corrige les perturbations de compositions d'un extrait (EA), ou d'un raffinat (RB), dues au volume mort introduit par au moins une pompe (P) de recyclage d'un mélange liquide, supercritique ou gazeux dans une boucle fermée de tronçons de colonnes, ou dues à la dégradation de leur propriété de séparation chaque fois qu'un courant d'injection ou de soutirage passe d'une position antérieure à une position postérieure à chacun des volumes morts de la boucle ou à chacun des tronçons dont les propriétés de séparation sont dégradées. On augmente d'abord, d'une valeur appropriée, la durée de connexion dudit courant à la boucle, et ensuite lorsque le courant passe de la position postérieure au volume mort ou à la connexion du tronçon dégradé, à la position suivante, on diminue ladite durée de connexion, de telle façon que ladite durée reprenne la valeur qui aurait été appliquée si chacun des volumes morts avait été négligé ou les dégradations de propriétés de séparation avaient été négligées. Les injections sont continues dans ce procédé.

Le document CN-A-1327 867 décrit un procédé de séparation d'un mélange utilisant un dispositif de chromatographie présentant plusieurs colonnes susceptibles de former une boucle ouverte, le procédé utilisant une injection continue du mélange.

Une autre possibilité de procédé chromatographique est le procédé VARICOL. Ce procédé est décrit notamment dans les documents FR-A-2 785 196, US-A-6 375 839, US-A-6 136 198, US-A-6 413 419 ou US-A-6 712 973. Ce document décrit un procédé de séparation d'au moins un composant d'un mélange le contenant, dans un dispositif présentant un ensemble de colonnes chromatographiques où tronçons de colonnes chromatographiques contenant un adsorbant, montés en série et en boucle fermée. La boucle comporte au moins un point d'une injection de charge, un point de soutirage de raffinat, un point d'une injection d'un éluant et un point d'un soutirage d'extrait. Dans le dispositif, on détermine entre un point d'injection et un point de soutirage ou vice-versa une zone chromatographique ; au bout d'une période de temps donné, l'ensemble des points d'injection et de soutirage se trouvent décalés d'une colonne ou tronçon de colonne dans une direction donnée définie par rapport à celle de l'écoulement d'un fluide principal circulant à travers la boucle. Au cours de ladite période, on effectue le décalage des différents points d'injection et de soutirage d'une colonne ou tronçon de colonne à des temps différents de manière que la longueur des zones définies par lesdits différents points soit variable.

Dans le procédé VARICOL, les différentes lignes d'injection et de soutirage sont décalées de manière asynchrone. Les injections de l'éluant, du mélange à traiter ainsi que les soutirages d'extrait et de raffinat sont continus.

Une autre possibilité de procédé chromatographique est le SMB trois zones. Le procédé est mis en oeuvre dans un dispositif ayant plusieurs colonnes de chromatographie connectée entre elles en série. Deux mises en oeuvre sont décrites dans les documents
- Séparation Science and Technology, Volume 2, chapitre 13 : Simulated Moving Bed chromatography for biomolecules, R.M Nicoud,
- Simulierte GegenStrom-Chromatographie, Chem. Ing. Tech. 66 (1994) Nr10, Deckert & Arlt,
- Comparative Study of Flow Schemes for a simulated Countercurrent Adsorption Separation Process, AIChE Journal, November 1992, Vol 38, No11, Ching, Chu, Hidajat & Uddin,
- Preparative resolution of praziquantel enantiomers by simulated counter-current chromatography, Journal ôf Chromatography, 634 (1993) 215-219, Ching, lin & Lee,
- Counter-Current and Simulated Counter-Current Adsorption Separation Processes, Chemical Engineering Science, Vol 44, No 5, pp 1101-1038, 1989, Ruthven & Ching.

Dans une première mise en oeuvre, la zone 4 du SMB est éliminée : l'intégralité de la zone 3 est collectée au raffinat. L'avantage de ce dispositif est d'utiliser moins de colonnes en se passant des colonnes en zone 4. Il a été démontré cependant que ce dispositif entraîne une consommation d'éluant plus forte ainsi qu'une dilution plus importante du produit collecté au raffinat que dans un SMB 4 zones.

Dans une seconde mise en oeuvre de ce procédé, le fluide en sortie d'une colonne est dirigé vers l'entrée d'une colonne suivante, à l'exception d'un premier point du système pour lequel la sortie d'une colonne est intégralement collectée à l'extrait, un éluant étant injecté directement à l'entrée de la colonne suivante et à l'exception d'un autre point du système pour lequel la sortie d'une colonne est intégralement collectée au raffinat, un liquide de purge étant injecté directement à l'entrée de la colonne suivante d'où est soutiré le raffinat.

Dans les différentes mises en oeuvre du SMB trois zones, l'injection du mélange et l'injection du ou des éluants sont réalisées de manière continue. Les points d'entrées sorties sont décalés d'une colonne à des intervalles de temps fixes, de manière synchrone.

Une autre possibilité de procédé chromatographique est le SMB deux zones. Le document Two Section Simulated Moving Bed Process, Kwangnam Lee, Separation science and technology, 35(4), pp 519-534, 2000 décrit ce procédé. Le procédé est mis en oeuvre dans un dispositif ayant plusieurs colonnes de chromatographie connectée entre elles en série. Le fluide en sortie d'une colonne est dirigé vers l'entrée d'une colonne suivante, à l'exception d'un point du système pour lequel les fractions en sortie d'une colonne sont collectées. L'injection du mélange et l'injection de l'éluant sont réalisées de manière continue. Le point d'injection d'éluant, le point d'injection de mélange et le point de collecte des fractions sont décalés d'une colonne à des intervalles de temps fixes, de manière synchrone. De plus, il n'y a que deux zones ayant des débits de fluide différents, à savoir une zone avant le point d'injection de mélange et une zone après le point d'injection de mélange.

Un procédé SMB deux zones a aussi été décrit dans le document Two-zone SMB Process for Binary Separation, Weihua Jin and Phillip C. Wankat, Ind. Eng. Chem. Res. 2005, 44, 1565-1575. Ce document décrit un autre type de SMB deux zones. Au cours d'une première étape, un mélange est introduit entre des zones I et II assemblées en boucle fermée, alors qu'une partie du désorbent est recyclé de la zone I vers la zone II et qu'une autre partie du désorbent collecté en sortie de zone I est envoyé vers un réservoir. Au cours d'une deuxième étape (sans l'introduction de mélange) un désorbent frais et le contenu du réservoir sont utilisés pour produire les fractions. Le raffinat est soutiré en sortie de la zone I et l'extrait est soutiré de la zone II. A la fin de la deuxième étape, les points sont commutés et le procédé est répété.

Une autre possibilité de procédé chromatographique est le procédé Lit Mobile Simulé amélioré ou ISMB (« Improved Simulated Moving Bed » en anglais). Ce procédé est décrit notamment dans les documents EP-A-0 342 629 ou US-A-5 064 539. Le procédé alterne une étape de fonctionnement en boucle fermée avec un flux interne sans aucun soutirage ni injection et une étape de fonctionnement avec injection des flux de charge et d'éluant et de soutirage du flux d'extrait et de raffinat.

Encore une autre possibilité de procédé chromatographique est le procédé Cyclojet. Ce procédé peut être appliqué à une colonne ; il est décrit dans le document EP-A-0 981 399. Ce document décrit un procédé cyclique chromatographique utilisant une seule colonne comprenant, pendant chaque cycle, un régime périodique permanent atteint en alternant successivement :
- une phase de collecte du raffinat ou fraction la moins retenue ;
- une phase de recyclage au cours de laquelle la charge est injectée ;
- une phase de collecte de l'extrait ou fraction la plus retenue.

L'injection de la charge est effectuée au moyen d'une boucle qui est :
- remplie de charge par un dispositif de chargement ;
- basculée au sein du dispositif chromatographique lorsqu'il est en phase de recyclage ;
- rincée par de l'éluant dès que la collecte de l'extrait a commencé, la boucle est alors à nouveau susceptible d'être basculée vers le dispositif de chargement.

L'inconvénient de ce procédé est que l'injection s'effectue lors de l'étape de recyclage, ce qui impose l'utilisation d'une boucle d'injection.

Le procédé Cyclojet peut être aussi appliqué à deux colonnes ; il est décrit dans le document EP-A-0 877,936. Ce document décrit un procédé cyclique chromatographique préparatif, comprenant, en régime permanent :
(a) l'établissement d'un profil chromatographique à circulation en forme de huit, entre deux colonnes chromatographiques, sachant que ledit profil chromatographique ne passe jamais par une pompe d'élution ;
(b) injection discontinue et périodique d'un mélange, comprenant au moins deux fractions, dans ledit profil de circulation ; et
(c) collecte, de façon discontinue et périodique, d'au moins deux fractions enrichies depuis ledit profil de circulation.

Le principe repose donc sur l'utilisation d'un système de recyclage externe permettant d'éviter le transit de la fraction recyclée dans la pompe d'élution.

L'inconvénient de ce procédé est de mettre en oeuvre deux colonnes sans permettre de séparer deux fois plus de produit que pour un système à une colonne. L'équivalent d'une colonne est constamment non utilisé pour la séparation dans ce mode de recyclage externe. De plus, les deux colonnes étant éluées en série, la perte de charge en fonctionnement est doublée par rapport au système à une colonne

L'invention a pour but de purifier au moins un produit d'un mélange à traiter sur un dispositif simple ayant un nombre réduit de colonne, à savoir d'au moins deux colonnes. L'invention permet d'utiliser plusieurs dispositifs d'injections : pompe ou boucle d'injection. L'invention maximise également l'utilisation des colonnes pour la séparation.

Pour cela l'invention propose un procédé de séparation de fractions d'un mélange à séparer, dans un dispositif présentant :
- plusieurs colonnes de chromatographie montées en série,
- une boucle de séparation ouverte et comprenant en entrée un point d'injection d'éluant dans une des colonnes et en sortie un point de soutirage de fraction du mélange, le procédé comprenant des étapes de :
- injection discontinue du mélange à séparer dans la boucle de séparation ouverte,
- collecte d'au moins deux fractions,
- décalage d'au moins une colonne des points d'injection d'éluant et de soutirage de fraction de la boucle de séparation.

Selon une variante, l'étape d'injection de mélange est réalisée de manière indépendante par rapport aux étapes de collecte et de décalage.

Selon une variante, le mélange est injecté à l'entrée d'une colonne différente de la colonne où l'éluant est injecté.

Selon une variante, le mélange est injecté dans la boucle de séparation, en un point distant des points d'injection d'éluant et de collecte d'au moins une colonne.

Selon une variante, le décalage des points d'injection d'éluant et de collecte est réalisé dans la direction d'écoulement du mélange à séparer dans les colonnes.

Selon une variante, au moins deux fractions sont collectées successivement au point de collecte de la boucle de séparation.

Selon une variante, le dispositif comprend deux colonnes en série, l'entrée de la boucle de séparation étant à l'entrée d'une des colonnes et la sortie de la boucle de séparation étant à la sortie de l'autre colonne, l'étape de collecte comprenant la collecte de deux fractions au point de soutirage en sortie de la boucle de séparation, l'une des fractions, l'extrait, étant plus retenue dans les colonnes que l'autre fraction, le raffinat, moins retenue dans les colonnes.

Selon une variante, au cours de l'étape de décalage, les points d'injection d'éluant et de soutirage de la boucle de séparation sont décalés à des temps différents.

Selon une variante, au cours de l'étape de décalage, le point d'injection d'éluant de la boucle de séparation est décalé d'au moins une colonne vers le point de soutirage de la boucle de séparation, dans la direction d'écoulement du mélange à séparer dans les colonnes, au moins une colonne demeurant entre le point d'injection et le point de soutirage.

Selon une variante, au cours de l'étape de décalage, le point de soutirage de la boucle de séparation est décalé dans la direction du sens d'écoulement du mélange à séparer dans les colonnes, d'autant de colonnes que le point d'injection d'éluant de la boucle de séparation a été décalé.

Selon une variante, le dispositif comprend en outre au moins une autre boucle, chaque autre boucle étant ouverte et comprenant en entrée un autre point d'injection d'éluant et en sortie un autre point de collecte, le procédé comprenant, après le décalage du point d'injection d'éluant de la boucle de séparation d'au moins une colonne, le décalage d'au moins une colonne du point de soutirage d'une des autres boucles.

Selon une variante, après le décalage du point d'injection d'éluant de la boucle de séparation d'au moins une colonne, au moins une autre boucle apparaît avec au moins une colonne décalée, chaque autre boucle apparue étant ouverte et comprenant en entrée un autre point d'injection et en sortie un autre point de soutirage.

Selon une variante, chaque boucle est éluée avec des éluants de nature ou de compositions différentes.

Selon une variante, au cours de l'étape de décalage, les points d'injection d'éluant et de soutirage de la boucle de séparation sont décalés simultanément.

Selon une variante, le dispositif comprend en outre au moins une autre boucle, chaque autre boucle étant ouverte et comprenant en entrée un autre point d'injection d'éluant et en sortie un autre point de soutirage, l'étape de collecte comprenant en outre la collecte au point de soutirage de chaque autre boucle.

Selon une variante, chaque boucle est éluée avec des éluants de nature ou de compositions différentes.

Selon une variante, au cours de l'étape de décalage des points d'injection d'éluant et de collecte de la boucle de séparation, les autres points d'injection d'éluant et de collecte de chaque autre boucle sont décalés simultanément avec les points d'injection d'éluant et de collecte de la boucle de séparation.

Selon une variante, chaque boucle autre que la boucle de séparation assure la désorption des fractions de mélange les plus retenues dans les colonnes ou la régénération des colonnes.

Selon une variante, les points d'injection d'éluant et de soutirage de la boucle de séparation sont contigus.

Selon une variante, les points d'injection d'éluant et de soutirage de la boucle de séparation ne sont pas contigus.

Selon une variante, les points d'injection d'éluant et de soutirage sont séparés par au moins une autre boucle de séparation.

Selon une variante, l'injection est seulement effectuée au cours de certaines périodes.

Selon une variante, le procédé est cyclique.

L'invention se rapporte aussi à un dispositif comprenant
- plusieurs colonnes de chromatographie montées en série,
- une boucle de séparation ouverte comprenant en entrée un point d'injection d'éluant dans une des colonnes et en sortie un point de soutirage de fraction d'un mélange à séparer, ainsi qu'un point d'injection de mélange,
- une commande adaptée à injecter de manière discontinue un mélange à séparer dans la boucle ouverte et à décaler d'au moins une colonne les positions des points d'injection et de soutirage.

Selon une variante, la commande est adaptée à décaler les positions des points d'injection d'éluant et de soutirage de la boucle de séparation de manière simultanée.

Selon une variante, la commande est adaptée à décaler les positions des points d'injection d'éluant et de soutirage de la boucle de séparation à des temps différents.

Selon une variante, le point d'injection de mélange est en entrée d'une colonne différente de la colonne où est le point d'injection d'éluant.

Selon une variante, le dispositif comprend en outre, entre le point de soutirage et le point d'injection d'éluant de la boucle de séparation, au moins une autre boucle, chaque autre boucle étant ouverte et comprenant en entrée un point d'injection d'éluant et en sortie un point de soutirage.

Selon une variante, lequel la commande est adaptée à décaler les points d'injection d'éluant et de collecte de chaque autre boucle, simultanément avec les points d'injection d'éluant et de collecte de la boucle de séparation.

Selon une variante, chaque autre boucle est du type boucle de désorption ou boucle de régénération.

Selon une variante; lé dispositif comprend en outre une phase stationnaire dans les colonnes.

Selon une variante, le dispositif comprend une boucle d'injection ou une pompe d'injection pour l'injection de la charge.

Selon une variante, le dispositif comprend une pompe pour l'injection de la charge et autant de pompes qu'il y a d'éluants.

Selon une variante, une pompe est intercalée entre au moins deux des colonnes du dispositif.

Selon une variante, le dispositif est pour la mise en oeuvre du procédé tel que décrit précédemment.

D'autres caractéristiques et avantages de l'invention apparaîtront à la lecture de la description détaillée qui suit des modes de réalisation de l'invention, donnés à titre d'exemple uniquement et en références aux dessins qui montrent :
- figures 1 à 3, le fonctionnement du procédé et du dispositif selon l'invention ;
- figures 4 à 7, le fonctionnement des figures 1 à 3 appliqué à plus de deux colonnes ;
- figures 8 à 16, le fonctionnement des figures précédentes, avec plus d'une boucle ;
- figures 17 à 26, des exemples de graphes d'élution de composés.

L'invention se rapporte à un procédé de séparation de fractions d'un mélange à séparer. Le procédé est appliqué à un dispositif présentant plusieurs colonnes de chromatographie montées en série. Le dispositif comprend une boucle de séparation au sein des colonnes. La boucle de séparation est ouverte et comprend en entrée un point d'injection d'éluant et en sortie un point de soutirage de fraction du mélange à séparer. Le procédé comprend des étapes d'injection discontinue d'un mélange à séparer dans la boucle de séparation ouverte, de collecte d'au moins deux fractions, de décalage d'au moins une colonne des points d'injection et de soutirage de la boucle de séparation. Le procédé est simple.

Le procédé permet d'exploiter la totalité de la phase stationnaire à la différence du procédé Cyclojet à deux colonnes qui nécessite d'avoir constamment une des deux colonnes pleine d'éluant.

La collecte de fractions hors du dispositif a lieu en des points différents du dispositif selon les modes de réalisation. Dans un dispositif deux colonnes la collecte des fractions peut être faite au point de soutirage de la boucle de séparation ; dans un dispositif à plus de deux colonnes, il est envisageable qu'une fraction soit collectée au point de soutirage de la boucle de séparation, alors qu'une ou plusieurs autres fractions soient collectées en d'autres points du dispositif.

Dans ce qui suit, on peut envisager que l'injection de mélange soit réalisée au sein même d'une colonne divisée en tronçons de colonne, et non pas seulement en entrée de colonne. Il en va de même pour l'injection d'éluant et la collecte de fraction. Dans ce qui suit, le terme colonne est utilisé pour désigner une colonne chromatographique ou un tronçon de colonne chromatographique.

Les colonnes sont susceptibles d'accueillir une phase stationnaire (liquide ou solide) ou lit chromatographique. La phase stationnaire permet d'adsorber au moins une fraction du mélange à séparer ; on parle de fractions plus ou moins retenue par la phase stationnaire. Dans le cas d'un mélange binaire, la fraction la plus retenue par là phase stationnaire est l'extrait, la fraction la moins retenue par la phase stationnaire est le raffinat. A titre d'exemple les éluants utilisables sont des fluides : liquides, gazeux, supercritiques ou subcritiques. L'éluant utilisé peut être un fluide monophasique constitué d'au moins un produit gazeux à pression et température ambiante. L'éluant utilisé peut être un fluide contenant au moins du dioxyde de carbone à l'état supercritique. L'éluant utilisé peut être un fluide homogène contenant au moins du dioxyde de carbone. L'éluant peu être recyclé par des moyens pris dans le groupe consistant en la distillation, l'évaporation et l'utilisation de membranes. A titre d'exemple, les phases stationnaires peuvent être un liquide ou un solide, un adsorbant au sens général, comme un tamis moléculaire, zéolithique par exemple, utilisé dans les procédés d'adsorption, ou un adsorbant comme une résine polymérique. Les phases stationnaires peuvent aussi être une résine échangeuse d'ions utilisée pour faire de l'échange d'ions ou de la purification de sucre. Il peut aussi être utilisé une phase stationnaire sur base de silice, un adsorbant phase inverse ou une phase chirale. Le domaine de pressions dans lequel on réalise des séparation peut se situer entre 0,1 et 50 MPa et de préférence entre 0,1 et 30 MPa. La température est en général comprise entre 0 et 100°C.

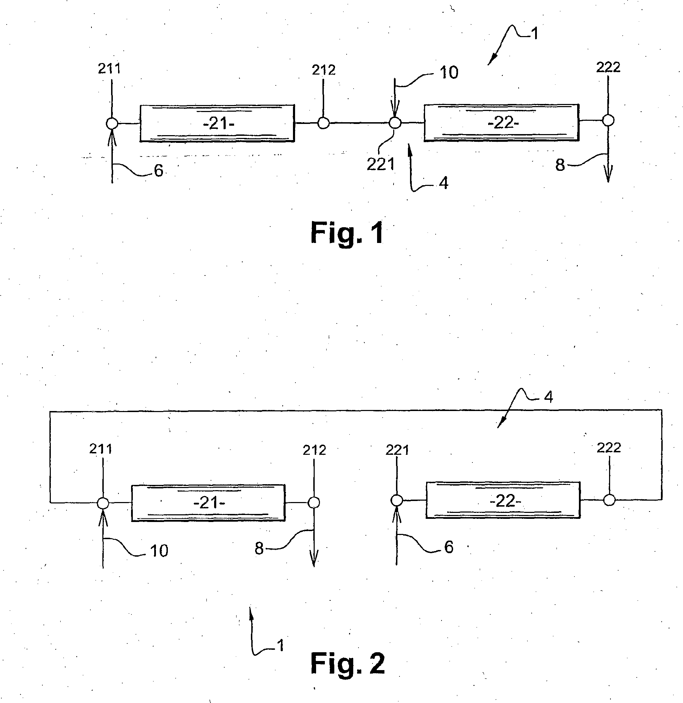

Les figures 1 à 3 montrent un dispositif 10 de chromatographie. Ce dispositif permet de séparer des fractions F1, F2, F3,... d'un mélange (ou charge) à séparer. Le mélange peut être binaire, c'est-à-dire comportant deux composés; toutefois, le mélange peut aussi contenir plus de deux composés. Selon la figure 1, le dispositif 1 comprend deux colonnes 21 et 22 de chromatographie ; le dispositif peut contenir N colonnes avec N > 2. Les colonnes sont montées en série, en ce sens que la colonne 21 a une sortie 212 contiguë à l'entrée 221 de l'autre colonne 22 ; la sortie 212 de la colonne 21 peut être connectée à l'entrée 221 de la colonne 22, de sorte à faire circuler un fluide entre les deux colonnes 21 et 22. Par la suite, on appelle colonnes en série des colonnes dont la sortie d'une colonne est susceptible d'être connectée à l'entrée d'une autre colonne, pour faire circuler un fluide entre les colonnes.

Les colonnes 21 et 22 forment une boucle de séparation 4, cette boucle permettant la dissociation d'une fraction composant le mélange à séparer. La boucle 4 est ouverte ; la boucle 4 a un point d'entrée et un point de sortie. La boucle est ouverte car l'entrée et la sortie de la boucle ne sont pas connectées. Il n'y a donc pas de fluide circulant entre l'entrée et la sortie de la boucle. L'avantage d'une boucle ouverte est que cela facilite le fonctionnement du dispositif et du procédé : hors étape d'injection, le débit dans la boucle de séparation est le même. Ceci rend le fonctionnement du dispositif simple ; il n'y a pas comme en SMB par exemple à gérer de collecte entre différentes zones puisqu'en l'occurrence, il n'y a qu'une seule zone.

Par ailleurs, par le fonctionnement en boucle ouverte, le dispositif et le procédé permettent de collecter constamment une ou des fractions purifiées, contrairement aux procédés à recyclage du type Cyclojet, ISMB, ou SMB 2 zones à injection discontinue faisant intervenir une étape de circulation en boucle fermée.

Selon la figure 1, l'entrée de la boucle 4 est l'entrée 211 de la colonne 21 et la sortie de la boucle 4 est la sortie 222 de la colonne 22. On voit que l'entrée 211 n'est pas connectée à la sortie 222. Par ailleurs, l'entrée et la sortie de la boucle peuvent être contiguës ; l'entrée et la sortie de la boucle peuvent alors être reliées lors d'une étape de décalage comme cela sera décrit par la suite en ouvrant la boucle à un autre endroit. L'entrée et la sortie de la boucle peuvent ne pas être contiguës ; en effet l'entrée et la sortie peuvent être séparées par au moins une boucle additionnelle, comme cela sera décrit par la suite. L'avantage d'une boule ouverte est que la mise en oeuvre est simple ; une boucle ouverte laisse par ailleurs le choix dans les façons d'injecter un fluide dans la boucle, en utilisant par exemple une pompe ou une boucle d'injection.

La boucle comporte en entrée un point d'injection 6 et en sortie un point de soutirage 8. Au point d'injection 6 de la boucle 4, un éluant est injecté dans la boucle. L'éluant permet d'effectuer la séparation de fractions par élution au sein des colonnes ; en particulier, l'éluant permet d'entraîner les différents composés du mélange qui sont plus ou moins retenus par la phase stationnaire. Au point de soutirage 8 de la boucle 4, on effectue une étape de soutirage d'au moins une fraction composant le mélange à séparer. On peut ainsi recueillir une fraction plus retenue par la phase stationnaire ou une fraction moins retenue par la phase stationnaire. Toutefois, dans ce dispositif à deux colonnes, il est préférable de collecter au moins deux fractions (F1, F2, ..., Fj) au point de soutirage 8. En particulier, les fractions sont collectées successivement au même point de soutirage 8 ; l'avantage est donc que l'opération de collecte ou d'injection n'a pas à utiliser un dispositif de régulation de débit - en effet le débit de collecte est égal au débit liquide dans la colonne.

La figure 1 montre aussi un point d'injection 10 de mélange à séparer dans la boucle 4 de séparation. L'injection du mélange est discontinue, en ce sens que l'injection de mélange est interrompue dans le temps. Ceci permet d'utiliser un nombre faible de colonne ; en effet, lors de l'injection, la colonne se remplit du mélange à séparer et si l'injection est trop longue les puretés d'au moins une des fractions collectées risque de diminuer.

L'injection du mélange est réalisée dans la boucle 4 qui est ouverte. Le mode d'injection de mélange (ou charge) et variable. Il peut être effectuée par injection de charge avec arrêt de l'injection d'éluant; le débit d'injection de charge peut être différent du débit de la pompe d'éluant. L'injection du mélange peut aussi être fait par une pompe de charge sans arrêt du débit d'éluant. Le débit de la pompe de charge peut être différent du débit de la pompe d'éluant. Le mélange peut aussi être injecté au moyen d'une boucle d'injection contenant le mélange. Une boucle d'injection permet d'ajouter un volume contenant le mélange dans la boucle de séparation.

L'avantage de ce procédé où l'injection est effectuée au sein d'une boucle ouverte est donc que différents dispositifs d'injection sont utilisables : une pompe ou une boucle d'injection, contrairement à un dispositif type Cyclojet à 1 colonne ou SMB 2 zones. Pour un Cyclojet une colonne par exemple, une pompe ne peut être utilisée avec un éluant liquide car l'injection se déroule dans un circuit fermé ; le choix de la boucle d'injection est alors obligatoire. Dans le cas du SMB 2 zones à injection discontinue, l'injection est effectuée par une pompe mais le dispositif nécessite l'utilisation d'un réservoir additionnel, car l'injection se fait aussi en boucle fermée.

Par ailleurs, l'étape d'injection de mélange peut être réalisée de manière indépendante par rapport aux étapes de collecte et de décalage ; le mélange peut être injecté en un endroit et à un moment quelconque par rapport à la position des autres points d'injection et de soutirage. Le mélange peut être injecté à une entrée quelconque de colonne. L'injection de mélange peut aussi être effectuée seulement au cours de certaines périodes. L'utilisateur a alors une plus grande liberté pour régler l'injection de mélange.

De préférence, le mélange est injecté à l'entrée d'une colonne différente de la colonne où l'éluant est injecté. Dans le sens d'écoulement, l'éluant est donc injecté plus en amont que le mélange. L'avantage est d'obtenir une meilleure séparation des fractions. Par ailleurs, Il est aussi préférable que le mélange soit injecté dans la boucle 4 de séparation en un point distant des points d'injection 6 et de soutirage 8 d'une colonne ; en d'autres termes le point d'injection du mélange 10 est réalisée au milieu de la boucle 4 de séparation. Sur la figure 1, le point d'injection de mélange 10 est entre les deux colonnes 21 et 22, à l'entrée 221 de la colonne 22. Dans un dispositif comportant un nombre plus important de colonnes, l'injection de charge est effectuée à distance d'au moins une colonne du point où se trouvent l'éluant et la collecte de fraction.

La figure 2 montre qu'un décalage des points d'injection 6 et de soutirage 8 est effectué dans le dispositif et au cours du procédé. En effet, le point d'injection 6 est décalé d'un colonne, et est désormais à l'entrée 221 de la colonne 22 ; également, le point de soutirage 8 est décalé d'une colonne, et est désormais à la sortie 212 de la colonne 21. De plus, la sortie 222 de la colonne 22 est connectée à l'entrée 211 de la colonne 21, de sorte à permettre au fluide de circuler de la colonne 22 à la colonne 21. Par ailleurs, la boucle 4 est maintenue ouverte car la sortie 212 de la colonne 21 n'est plus connectée à l'entrée 221 de la colonne 22. Il y a donc aussi eu un décalage de l'entrée et de la sortie de la boucle 4. Sur la figure 2, le point d'injection de mélange 10 est entre les deux colonnes 22 et 21 à l'entrée 211 de la colonne 21.

Le décalage des points d'injection et de soutirage se règle sur les vitesses de déplacement des espèces au sein du dispositif, permettant ainsi de collecter au moins une fraction lorsque sa pureté ou son enrichissement est suffisant.

Le décalage est de préférence dans la direction d'écoulement du mélange à séparer dans les colonnes. Le décalage des points d'injections et de soutirage dans le sens d'écoulement permet de suivre les mouvements des produits dans le procédé, leur permettant de se répartir dans la boucle 4 et d'exploiter ainsi au mieux la phase stationnaire du système. Pour ces raisons, le rendement du dispositif et du procédé est amélioré.

Le décalage des points d'injection 6 et de soutirage 8 peut être d'une colonne ; ceci est le cas sur la figure 2. Toutefois, il est aussi envisageable de décaler les points d'injection 6 et de soutirage 8 de plus d'une colonne, lorsque la boucle comporte plus de deux colonnes. L'avantage est par exemple de pouvoir simuler une colonne de volume V par des colonnes plus petites dont la somme des volumes est égal à V.

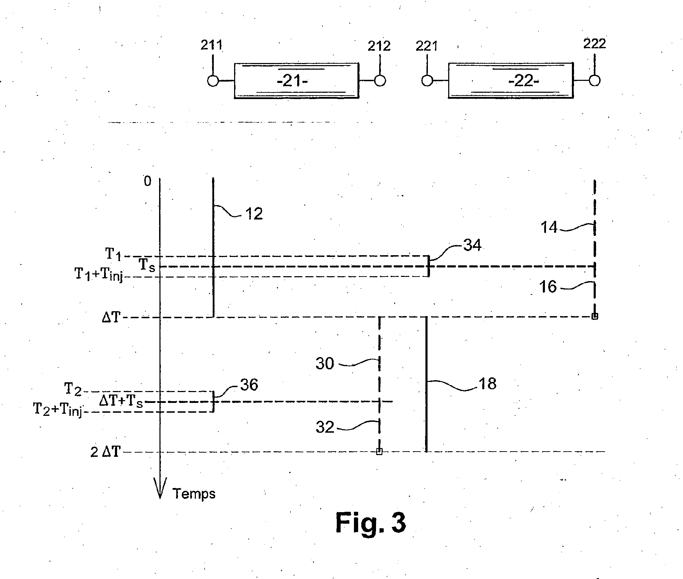

La figure 3 est un exemple de diagramme résumant le mode d'injection et de soutirage ainsi que le décalage des points d'injection et de soutirage tels que décrits précédemment dans un dispositif comportant une boucle ouverte avec deux colonnes. Par la description de cette figure, on montrera que le fonctionnement du dispositif est cyclique, et qu'un cycle comporte autant de période que de colonne dans la boucle de séparation. On notera aussi que les fractions sont collectées au même point. De façon générale pour ce qui suit, une période ΔT est alors définie comme le plus petit intervalle de temps au bout duquel chacun les point d'injection et de soutirage ont été décalés du même nombre de colonnes.

La figure 3 montre les deux colonnes 21 et 22 le long desquelles le mélange se sépare. Le temps est également représenté selon un axe vertical. Ce temps correspond au temps d'injection de mélange ou d'éluant dans la boucle 4 ainsi qu'au temps de collecte d'au moins une fraction du mélange.

On admet qu'à l'instant T= 0, le dispositif fonctionne à un régime établi ; pour cela il y a déjà eu injections de mélange et d'éluant ainsi que collecte d'une ou plusieurs fractions.

A T=0, l'entrée de la boucle 4 correspond à l'entrée de la colonne 21 et la sortie de la boucle 4 correspond à la sortie de la colonne 22. La figure 3 montre une injection 12 d'éluant à l'entrée de la boucle, à l'entrée de la colonne 21 et des collectés 14 et 16 de fractions en sortie de boucle, à la sortie de la colonne 22. L'injection 12 d'éluant et les collectes 14 et 16 de fractions peuvent avoir lieu pendant toute une première période ΔT. La collecte 14 d'une fraction est suivi à l'instant Ts par la collecte 16 d'une autre fraction. Dans le cas d'un mélange binaire, on peut collecter d'abord l'extrait qui est la fraction la plus retenue puis collecter le raffinat qui est la fraction la moins retenue. Ainsi, dans le cas d'un mélange binaire, la période ΔT peut être composée de deux sous-périodes de collecte de chacune des fractions. On peut aussi envisager de collecter plus de deux fractions le cas échéant, la période ΔT étant composée alors d'autant de sous-périodes que de fractions.

Il est aussi envisageable qu'au cours d'une période, les étapes d'injection et/ou de collecte soient interrompues.

En fin de première période ΔT, les points d'injection 6 et de soutirage 8 sont décalés d'une colonne comme cela a été décrit en liaison avec la figure 2. L'entrée de la boucle 4 correspond maintenant à l'entrée de la colonne 22 et la sortie de la boucle 4 correspond à la sortie de la colonne 21. Commence alors une deuxième période 2ΔT ; une injection 18 d'éluant a lieu à l'entrée de la boucle, à l'entrée de la colonne 22 ainsi que des collectes 30 et 32 de fractions en sortie de boucle, à la sortie de la colonne 21. L'injection 18 d'éluant et les collectes 30 et 32 de fractions peuvent avoir lieu pendant toute la deuxième période 2ΔT. Ainsi, le collecte 30 d'une fraction peut être suivi à l'instant ΔT + Ts par le collecte 32 d'une autre fraction. Les temps de collecte des différentes fractions peuvent être identiques d'une période à une autre ou être différents.

On constate sur la figure 3 qu'un nouveau décalage en fin de deuxième période 2ΔT conduit le dispositif à être à nouveau dans la configuration de la figure 1 ; le procédé de séparation décrit fonctionne de manière cyclique, le dispositif étant dans une configuration initiale à la fin de chaque cycle. Chaque cycle peut lui-même être divisé en autant de période que la boucle a de colonnes ; sur la figure 3, le cycle comporte deux périodes car le dispositif décrit a deux colonnes. Aussi, chaque période peut être divisée en autant de sous-périodes qu'il y a de fractions à collecter pour chaque ligne de sortie. Il y a donc une collecte ou plus de fractions sur une période. De plus, le profil de chromatographie des fractions du mélange s'étend sur toutes les colonnes de la boucle de séparation 4 ce qui permet d'exploiter toutes les colonnes de cette boucle au cours de la séparation.

La figure 3 montre aussi l'injection du mélange dans le dispositif. L'injection peut être périodique (à chaque période). Au cours de la première période ΔT, l'injection de mélange 34 a lieu à un instant T1. L'injection de mélange 34 s'arrête par exemple à l'instant T1+Tinj. L'injection de mélange 34 est donc discontinue car ne dure pas sur toute la période. Au cours de l'injection, selon le mode d'injection, il est possible soit d'arrêter soit de maintenir le débit de l'éluant à l'entrée 211 de la colonne 21. Au cours de la deuxième période 2ΔT, l'injection de mélange 36 a lieu à un instant T2. L'injection de mélange 36 s'arrête par exemple à l'instant T2+Tinj. A nouveau, l'injection de mélange 36 est discontinue car ne dure pas sur toute la deuxième période. Au cours de l'injection, selon le mode d'injection, il est possible soit d'arrêter soit de maintenir le débit de l'éluant à l'entrée 221 de la colonne 22 De préférence, l'injection de mélange est périodique ; ceci permet de réinjecter du mélange frais pour que le dispositif fonctionne en permanence. Egalement l'étape d'injection 34 et 36 de mélange est réalisée à un moment et en un point quelconques par rapport aux étapes de collecte 14, 16, 30, 32 et d'injection d'éluant 12, 18. Ainsi l'injection de mélange peut commencer à n'importe quel moment de la période. Il est aussi envisageable que l'injection de mélange commence en fin d'une période et se termine au début de la période suivante. Ainsi, l'injection de mélange est indépendante des positions et des mouvements des points d'injection d'éluant et de soutirage des fractions. Ceci est avantageux car permet d'injecter à tout moment et en tout point du dispositif.

L'injection du mélange peut aussi être cyclique, un volume constant de mélange étant injecté à chaque cycle entier, en un nombre de fois inférieur au nombre de colonnes. Ainsi, un volume V peut être injecté en une seule fois plutôt qu'un volume V/2 à chacune des deux périodes dans un dispositif à 2 colonnes. Alternativement on peut injecter deux fois un volume V plutôt qu'injecter un volume V/2 à chacune des quatre périodes dans un dispositif à quatre colonnes. L'avantage est alors d'injecter un volume plus important (plus simple avec une pompe) ou de limiter le nombre de dispositifs d'injections s'il s'agit de boucles.

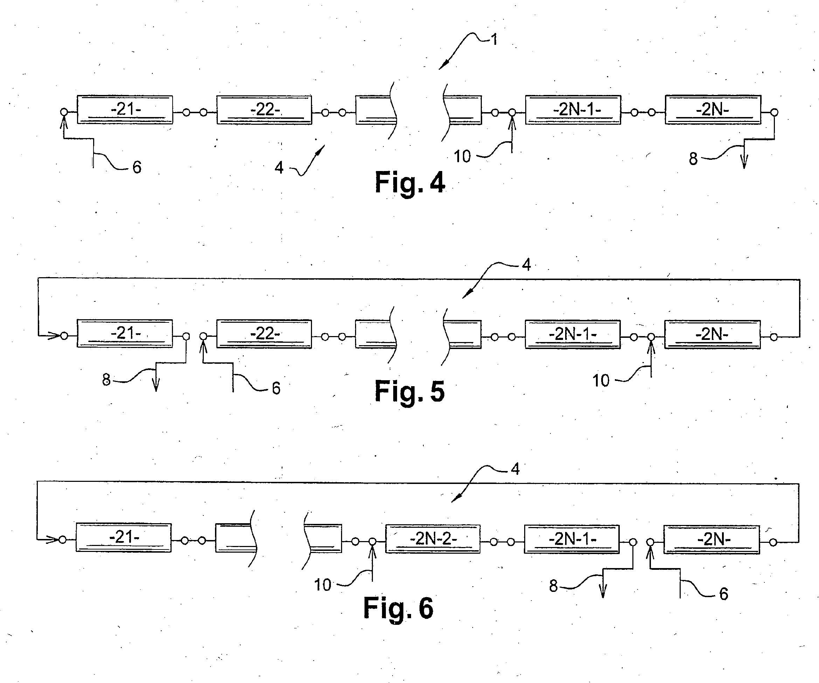

Les figures 4 à 7 montre le procédé de séparation appliqué à un dispositif comprenant N colonnes, avec N > 2. Sur la figure 4, la boucle 4 comporte N colonnes en série, les colonnes ayant une sortie qui peut être connectée à l'entrée d'une colonne suivante. La sortie d'une colonne peut être connectée à l'entrée d'une colonne suivante, à l'exception de la sortie de la colonne 2N qui n'est pas connectée à l'entrée de la colonne 21 de sorte que la boucle 4 soit ouverte. A l'entrée de la boucle 4, le point d'injection d'éluant 6 est en entrée de la colonne 21. A la sortie de la boucle 4, le point de soutirage de fraction 8 est en sortie de la colonne 2N. Ainsi un fluide peut circuler entre les colonnes. Le point d'injection 10 de mélange est représenté à titre d'exemple entre les colonnes 2N-1 et 2N-2. Sur la figure 5, les points d'injection 6 et de soutirage 8 sont décalés d'une colonne. La sortie de la colonne 2N est alors connectée à l'entrée de la colonne 21. La boucle est ouverte entre les colonnes 21 et 22. Enfin, à la figure 6, les points d'injection 6 et de soutirage 8 ont été décalés N-1 fois ; un nouveau décalage d'une colonne des points 6 et 8 achève un cycle de fonctionnement du procédé. Au cours de ce cycle, le mélange a été injecté de manière discontinue, une injection ayant eu lieu à la figure 4 puis s'est interrompue.

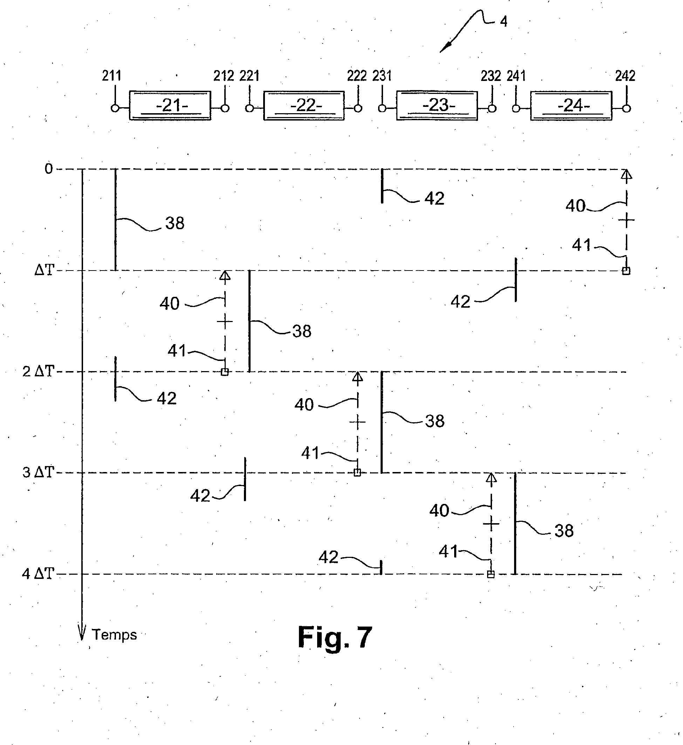

La figure 7 est un diagramme résumant le mode d'injection et de collecte ainsi que le décalage des points d'injection et de soutirage tels que décrits précédemment dans un dispositif comportant une boucle ouverte avec quatre colonnes 21, 22, 23, 24. Le fonctionnement du procédé est sur quatre colonnes. Au cours de chaque période, une injection d'éluant 38 et des collectes 40 et 41 ont lieu pendant la durée de chaque période. Entre chaque période, les points 6 et 8 sont décalés, par exemple d'une colonne. Ainsi, au bout de quatre décalages, les points 6 et 8 sont à nouveau à la position initiale. Sur la figure 7, il est montré que deux fractions sont collectées successivement au cours de chaque période, à titre d'exemple.

Par ailleurs, la figure 7 montre des injections discontinues de mélange 42. Les injections ont lieu dans la boucle 4, entre les colonnes 22 et 23. Les injections sont périodiques car elles ont lieu à chaque période. Les injections de mélange 42 sont réalisées à un moment et en un point quelconques par rapport aux moments et aux endroits d'injections 38 et de collectes 40 et 41. Les injections de mélange sont indépendantes de l'injection d'éluant et de la collecte de fraction. Par exemple, les injections de mélange 42 sont réalisées à cheval sur deux périodes, en débutant à la fin d'une période et en terminant au début de la période suivante et le début de l'injection du mélange 42 n'a pas lieu au milieu de la boucle alors que la fin de l'injection du mélange 42, par le décalage des points 6 et 8, a lieu au milieu de la boucle. Selon le mode d'injection, il est possible soit d'arrêter, soit de maintenir le débit de l'éluant au cours de l'injection.

La figure 7 montre que pour une boucle de 4 colonnes, un cycle comprend quatre périodes ΔT, 2ΔT, 3ΔT, 4ΔT. Au bout de ces quatre périodes, les points 6 et 8 sont dans les mêmes positions qu'au début du cycle. Chaque période est alors divisée selon le nombre de fractions collectées. Sur les figures, les deux fractions sont collectées au même point de soutirage 8. Bien entendu, plus de deux fractions peuvent être collectées au même point de soutirage.

D'après les figures 3 et 7, les points d'injection d'éluant 6 et de soutirage 8 peuvent être décalés simultanément. Ces points 6 et 8 sont décalés en même temps. Le fonctionnement est synchrone. Ceci permet de simplifier la gestion du décalage des points. Dans les exemples des figures 1, 2, 4, 5*,* 6, la boucle 4 est ouverte et l'entrée et la sortie de la boucle 4 sont contiguës ; avec un décalage simultané des points 6 et 8, l'entrée et la sortie de la boucle demeurent contiguës au cours du cycle de fonctionnement.

Alternativement, les points d'injection d'éluant 6 et de soutirage 8 peuvent être décalés à des temps différents. Le fonctionnement est asynchrone. Par exemple, le point d'injection 6 d'éluant est décalé avant le point de soutirage 8. Ceci permet par exemple de libérer autant de colonnes que le point d'injection 6 a été décalé de colonnes. Ces colonnes sorties de la boucle peuvent alors être destiné à une autre opération que la séparation du mélange. Comme cela sera décrit par la suite, on peut créer une zone de désorption ou une zone de régénération. Une période ΔT est alors définie comme le plus petit intervalle de temps au bout duquel chacun des point d'injection et de soutirage ont été décalés du même nombre de colonnes.

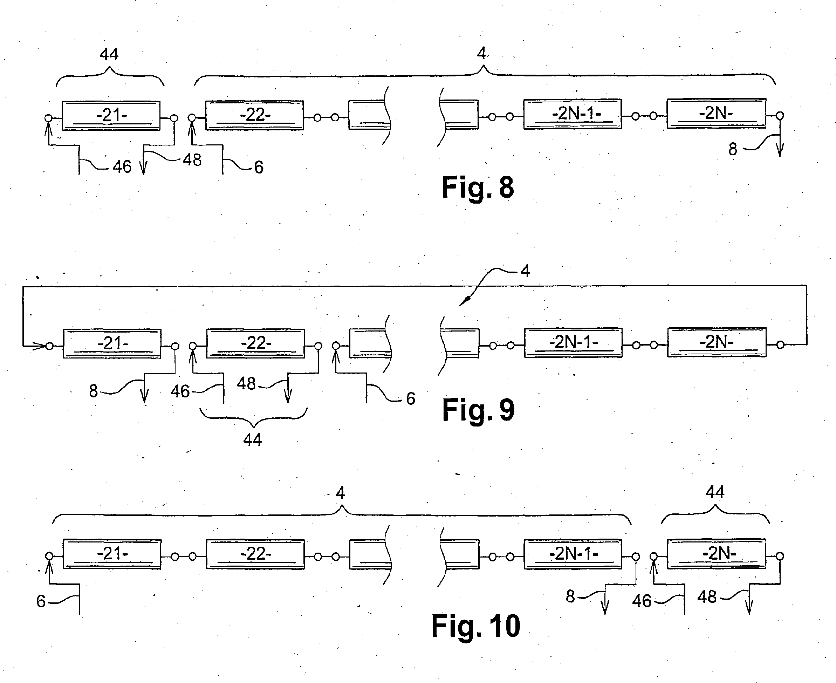

Les figures 8 à 10 montrent une variante du procédé et du dispositif. Sur ces figures, le dispositif comprend en outre au moins une autre boucle, ou boucle additionnelle.

Sur ces figures, le dispositif 1 comporte N colonnes (N≥2) et deux zones, à savoir une zone de séparation et une zone additionnelle, par exemple, une zone de désorption. La zone de séparation correspond à la boucle de séparation 4. La zone de désorption correspond à une autre boucle 44, appelée boucle de désorption. La boucle de séparation 4 est ouverte et comporte les colonnes 22 à 2N. En entrée de la boucle de séparation 4, on trouve le point d'injection 6 à l'entrée de la colonne 22 ; en sortie de la boucle de séparation 4, on trouve le point de soutirage 8 à la sortie de la colonne 2N. La boucle de désorption 44 est aussi ouverte et comporte la colonne 21. En entrée de la boucle de désorption 44, on trouve un autre point d'injection 46 à l'entrée de la colonne 21 ; en sortie de la boucle de désorption 44, on trouve un autre point de soutirage 48 à la sortie de la colonne 21. On a dans le cas présent deux boucles 4 et 44 dont l'ensemble des colonnes sont respectivement en série.

En entrée de boucle de séparation 4 de l'éluant est injectée au point d'injection 6 ; en sortie de boucle de séparation 4, au moins une fraction de mélange peut être collectée au point de soutirage 8. En entrée de boucle de désorption 44 de l'éluant peut être injecté au point d'injection 46 ; en sortie de boucle de désorption 44, au moins une fraction peut être collectée au point de soutirage 48. Au moins deux fractions sont collectées du dispositif, au moins une fraction pouvant être collectée en sortie de chaque zone.

Dans les figures 9 et 10; le même procédé qu'aux figures précédentes est appliqué au dispositif 1, à ceci près que les deux boucles sont décalés le long des colonnes. Les points d'injection et de soutirage de chaque boucle sont décalés de manière synchrone. A la figure 9, les points d'injection 6 et 46 et les points de soutirages 8 et 48 ont été décalés d'une colonne. Ainsi, l'entrée et la sortie de chaque boucle sont décalées. On pourrait décaler les entrées et les sorties de plus d'une colonne. A la figure 10, les points d'injection et de soutirage ont été décalés N-1 fois ; le décalage subséquent des points d'injection et de soutirage permet au dispositif de revenir à sa position initiale en début de cycle.

Appliqué aux figures 8 à 10, le procédé comprend une étape de collecte d'au moins une fraction aux points de soutirage 8 et 48 des boucles de séparation et de désorption ; le procédé comprend aussi une étape de décalage des points d'injection 6 et 46 et des points de soutirage 8 et 48 des boucles de séparation et de désorption.

Le mélange à séparer peut être injecté de manière discontinue dans la boucle de séparation 4, de manière indépendante par rapport aux étapes d'injection et de collecte; de préférence le point d'injection 10 du mélange est à l'entrée d'une colonne différente de la colonne où l'éluant est injecté dans la boucle de séparation 4.

De préférence, la boucle additionnelle ou de désorption 44 permet la désorption des fractions du mélange les plus retenues dans la phase stationnaire après décalage des points d'injection et de soutirage des boucles dans le sens de l'écoulement du fluide dans les colonnes. On peut par exemple ne collecter qu'une fraction en sortie de la boucle de désorption 44, tel que l'extrait d'un mélange binaire qui a été plus retenu par la phase stationnaire. La boucle de désorption 44 permet alors la désorption de l'extrait.

Il est envisageable aussi que le dispositif comprennent, outre la boucle de séparation 4, plusieurs boucles de désorption, définissant ainsi plusieurs zones de désorption ; chaque boucle de désorption est ouverte avec à l'entrée un point d'injection et à la sortie un point de soutirage. L'ensemble des colonnes sont en série Les éluants à l'entrée de chaque boucle de séparation et de désorption peuvent avoir des compositions et des débits différents. La composition et le débit d'éluant peuvent aussi varier au cours d'une période.

La ou les boucles additionnelles peuvent comporter une ou plusieurs colonnes.

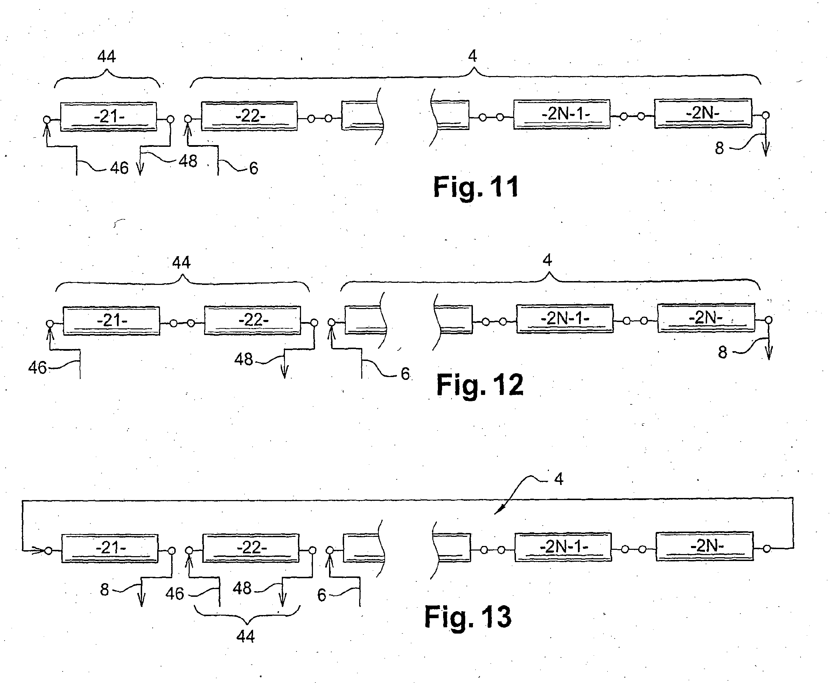

Le décalage des points d'injection et de soutirage de la boucle de séparation 4 et de la boucle additionnelle, par exemple de désorption 44, peuvent être synchrones, c'est-à-dire décalés en même temps ou asynchrone, c'est-à-dire décalés à des temps différents ; les boucles de désorption 44 et de séparation 4 peuvent alors comporter un nombre variable de colonnes. Sur les figures 11 à 13, le fonctionnement est asynchrone, le nombre de colonnes de chaque boucle étant variable. Ceci est avantageux pour des dispositifs comportant un nombre faible de colonnes, il est ainsi possible de définir une zone de désorption qui contient en moyenne sur une période un nombre non entier de colonne l'avantage étant alors de répartir finement les colonnes dans chacune des zones du procédé. On ne décrira pas le point d'injection du mélange 10, mais on se reportera pour cela aux figures précédentes.

Le dispositif comporte deux boucles, la boucle de séparation 4 et la boucle additionnelle ou de désorption 44. La figure 11 correspond à la figure 8. Sur la figure 11, la boucle de désorption 44 comporte une colonne et la boucle de séparation 4 comporte N-1 colonnes. Plusieurs fractions sont collectées du dispositif, au moins une fraction pouvant être collectée en sortie de chaque zone.

Sur la figure 12, au début d'une première période, le point d'injection 6 de la boucle de séparation 4 et le point de soutirage 48 de la boucle de désorption 44 sont décalés avant les points de soutirage 8 et d'injection 46 correspondants. Le décalage du point d'injection 6 de la boucle de séparation 4 et du point de soutirage 48 de la boucle de désorption 44 sont décalés d'au moins une colonne vers les points de soutirage 8 et d'injection 46 correspondants, dans la direction d'écoulement du mélange à séparer dans les colonnes, au moins une colonne demeurant entre les points 6 et 8 et entre les points 46 et 48. Le décalage est d'une colonne, par exemple. La boucle de désorption 44 comporte alors deux colonnes et la boucle de séparation 4 comporte N-2 colonnes.

Sur la figure 13, en fin de période, le point de soutirage 8 de la boucle de séparation 4 et le point d'injection 46 de la boucle de désorption 44 sont décalés d'autant de colonnes que les points 6 et 48 ont été décalés. La boucle de désorption 44 comporte alors une colonne et la boucle de séparation 4 comporte N-1 colonnes, comme en début de période. Ainsi, le nombre de colonnes de chaque boucle varie dans la période. Dans l'exemple des figures 11 à 13, le nombre de colonnes dans la boucle de désorption 44 varie au cours de la période. Il est donc possible de gérer un dispositif possédant sur une période de fonctionnement un nombre non constant de colonnes dans la boucle de désorption et dans la boucle de séparation.

La période décrite en liaison avec les figures 11 à 13 peut être répétée de sorte à parfaire un cycle de fonctionnement au terme duquel le dispositif retrouve la configuration des positions initiales des points d'injection et de soutirage des boucles. De même on peut prévoir plus d'une boucle de désorption et / ou une ou des boucles de type régénération.

Naturellement le nombre de colonnes de la boucle additionnelle ou de désorption 44 peut être différent de l'exemple donné aux figures 11 à 13. Le décalage en fin de période des points 8 et 46 peut intervenir après un décalage de plus d'une colonne des points 6 et 48. De même, la boucle de désorption 44 peut avoir un nombre de colonnes évoluant en accordéon avant de retrouver en fin de période le même nombre de colonnes qu'en début de période.

Sur les figures 11 à 13 on peut aussi injecter de l'éluant contenant de l'extrait concentré au point d'injection 6.

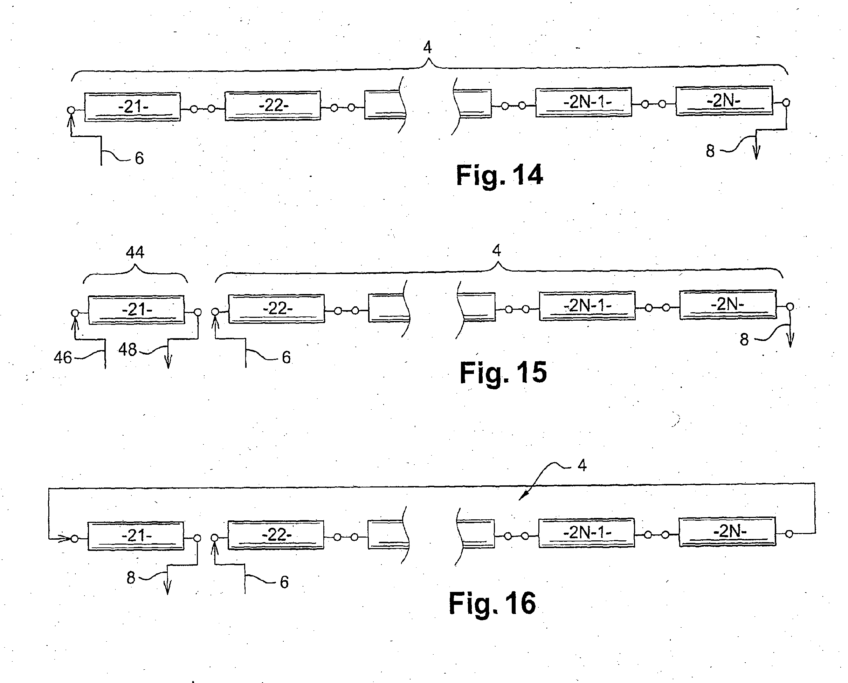

En mode de fonctionnement asynchrone, il est aussi envisageable qu'une ou plusieurs autres boucles, ou boucles additionnelles, par exemple de désorption, apparaissent et disparaissent au cours du fonctionnement. Ceci est décrit aux figures 14 à 16. On ne décrira pas le point d'injection du mélange 10, mais on se reportera pour cela aux figures précédentes.

La figure 14 correspond à la figure 4. La boucle de séparation 4 comporte N colonnes en série, les colonnes ont une sortie contiguë à l'entrée d'une colonne suivante. La sortie d'une colonne peut être connectée à l'entrée d'une colonne suivante, à l'exception de la sortie de la colonne N qui n'est pas connectée à l'entrée de la colonne 21 de sorte que la boucle de séparation 4 soit ouverte. A l'entrée de la boucle de séparation 4, le point d'injection d'éluant 6 est en entrée de la colonne 21. A la sortie de la boucle 4, le point de soutirage de fraction 8 est en sortie de la colonne 2N.

Sur la figure 15, en début de période, le point d'injection 6 de la boucle de séparation 4 est décalé avant le point de soutirage 8 de la boucle de séparation 4. Le point d'injection 6 d'éluant de la boucle de séparation 4 est décalé d'au moins un colonne vers le point de soutirage 8 de la boucle de séparation, dans la direction d'écoulement du mélange à séparer dans les colonnes, au moins une colonne demeurant entre le point d'injection 6 et le point de soutirage 8. Le décalage est par exemple d'une colonne. Le décalage dans le sens de l'écoulement met le point d'injection 6 en entrée de colonne 22. La colonne 21 est décalée hors de la boucle de séparation 4.

On entend par colonne décalée, une colonne qui apparaît lors du décalage, entre le point de soutirage 8 et le point d'injection 6 de la boucle de séparation 4, dans le sens de l'écoulement. Une colonne décalée est donc une colonne exclue d'une boucle, par exemple de la boucle de séparation 4 lors du décalage du point d'injection 6 de la boucle de séparation 4. Une colonne décalée n'a pas nécessairement ses entrée et sortie qui sont contiguës avec respectivement les sortie et entrée de la boucle de séparation 4. En effet, une colonne décalée peut apparaître alors qu'une autre boucle, par exemple de désorption, est déjà contiguë avec la boucle de séparation 4 ; la colonne décalée apparaît alors entre les deux boucles, par exemple dans le sens d'écoulement entre la boucle de désorption et la boucle de séparation 4.

Sur la figure 15 à nouveau, en cours de période, une boucle additionnelle ou de désorption 44 apparaît pour la colonne 21 décalée. Cette boucle de désorption 44 apparue a les mêmes caractéristiques que la boucle de désorption précédemment décrite, à savoir une structure ouverte et des points d'injection d'éluant en entrée et de soutirage de fraction en sortie. Ainsi le dispositif de la figure 15 comporte une boucle de séparation 4 de N-1 colonnes et une boucle de désorption 44 de une colonne. Plusieurs fractions sont collectées du dispositif, au moins une fraction pouvant être collectée en sortie de chaque zone.

Sur la figure 16, en fin de période, le point de soutirage 8 de la boucle de séparation 4 est à son tour décalé d'autant de colonnes que le point d'injection 6 de la boucle de séparation 4 a été décalé. Par exemple, pour un décalage de une colonne, le point d'injection 6 est décalé d'une colonne ; la boucle de désorption 44 est alors supprimée. Ainsi le dispositif de la figure 16 comporte une boucle de séparation 4 de N colonnes. La configuration de la figure 16 est la même que la configuration de la figure 5. L'ouverture de la boucle de séparation 4 a été décalée d'une colonne.

L'apparition puis la suppression d'une boucle de désorption au cours d'une période peut être répété sur autant de périodes que de colonnes de la boucle de séparation 4 ; au terme de la dernière période, le dispositif a fonctionné sur un cycle et à retrouvé la configuration des positions des points d'injection 6 et de soutirage 8 de la figure 14. On pourrait aussi considérer qu'aux figures 14 et 16, la zone de désorption comporte zéro colonnes et que les points d'injection 46 et de soutirage 48 de la boucle de désorption 44 sont confondus.

Ce dernier fonctionnement décrit est également intéressant pour les dispositifs comportant un nombre faible de colonnes, par exemple deux colonnes.

On peut aussi envisager aux figures 14 à 16 que le nombre de colonnes décalées soit plus important qu'une seule colonne décalée. Une boucle de désorption apparaissant pourrait alors comporter plus d'une colonne. Egalement, on peut créer plusieurs boucles de désorption à partir de plusieurs colonnes décalées.

Egalement, on peut envisager d'autres types de zones que des zones de désorption. Alternativement ou cumulativement à une ou plusieurs boucles de désorption, on peut prévoir par exemple des zones de lavage de colonne et / ou de régénération de phase stationnaire, le lavage et/ou la régénération pouvant être effectuée en inversant le sens d'écoulement du fluide chromatographique. Ce qui a été décrit précédemment est applicable à ces autres types de boucles. Ces autres boucles sont ouvertes. Ces boucles comprennent aussi en entrée un point d'injection et en sortie un point de soutirage. Par exemple, une phase stationnaire sous forme de résine échangeuse d'ions peut être régénérée par une boucle de régénération comprenant en entrée un point d'injection d'une solution de régénération et en sortie la collecte de ce qui a été élué.

Le dispositif et le procédé décrits peuvent aussi fonctionner selon un mode à la fois synchrone et asynchrone sur un cycle ou selon un mode synchrone sur un cycle et asynchrone sur un autre cycle. Ainsi, on peut adapter les fonctionnements du dispositif et du procédé selon les figures 8 à 10, 11 à 13 et 14 à 16 au fonctionnement du dispositif et du procédé selon les figures 4 à 7. L'avantage est que les boucles de désorption et/ou de régénération peuvent être constituées d'un nombre de colonnes moyen sur la période finement ajustable, nombre qui soit entier (fonctionnement synchrone) ou non entier (fonctionnement asynchrone).

Egalement, on peut envisager que le dispositif comporte plus d'une boucle de séparation, par exemple au moins deux boucles de séparation contiguës. Ces boucles de séparation peuvent être alternées avec une ou des boucles de type désorption ou autre. Les divers fonctionnements décrits s'appliquent aussi à ce mode de réalisation.

Dans ce qui précède, chaque boucle peut être éluée avec des éluants de nature ou de compositions différentes. Ceci permet :
- de modifier la force éluante, par exemple en changeant la polarité, la pression, la température, le pH, la force ionique ;
- de régénérer la phase ;
d'utiliser dans la boucle de séparation un éluant contenant un déplaceur (préférentiellement le produit le plus retenu à une concentration élevée de l'ordre de grandeur de la concentration de charge).

Egalement, le dispositif peut ne comprendre que des pompes externes pour l'injection de la charge et/ou du ou des éluants. Mais le dispositif peut en outre comprendre une pompe intercalée entre au moins deux des colonnes du dispositif; ceci permet de diviser le gradient de pression s'établissant dans les colonnes du dispositif. Aussi, le dispositif peut comprendre une pompe entre chaque colonne, ce qui permet d'exploiter chacune des colonnes à sa pression optimale.

D'une manière générale, le procédé décrit est un procédé non-LMS en français ou « non-SMB » en anglais.

Le dispositif 1 décrit peut notamment fonctionner avec une commande adaptée à décaler d'au moins une colonne les positions des points d'injection et de soutirage. Ce décalage par la commande peut être de manière simultanée ou à des temps différents. On peut aussi envisager un fonctionnement avec un décalage simultané ou à des temps différents.

D'une façon générale, pour les dispositifs et procédés des figures 8 à 16 où plusieurs points de soutirage sont prévus, on peut envisager que des fractions différentes soient collectées selon les points de soutirage. Par exemple une fraction F4 est collectée au point 48 pendant que des fractions F3 puis F2 sont collectées au point 8, puis ensuite, une fraction F3 est collectée au point 48 et des fractions F2 puis F1 sont collectées au point 8. Chaque point de soutirage peut avoir une programmation de collecte dans le temps qui lui est propre.

Le procédé décrit s'applique à la purification de composés séparables par procédé chromatographiques par exemple :
- la purification de molécules de synthèse pour la chimie fine : par exemple la séparation d'isomères optiques notamment pour la pharmacie ;
- la séparation ou la purification des sucres notamment pour l'industrie agroalimentaire ;
- la séparation ou la purification de bio-molécules par exemple : peptides, protéines, anticorps monoclonaux, oligo-nucleotides, oligo-saccharides ; la séparation ou la purification des composés issus de la pétrochimie.

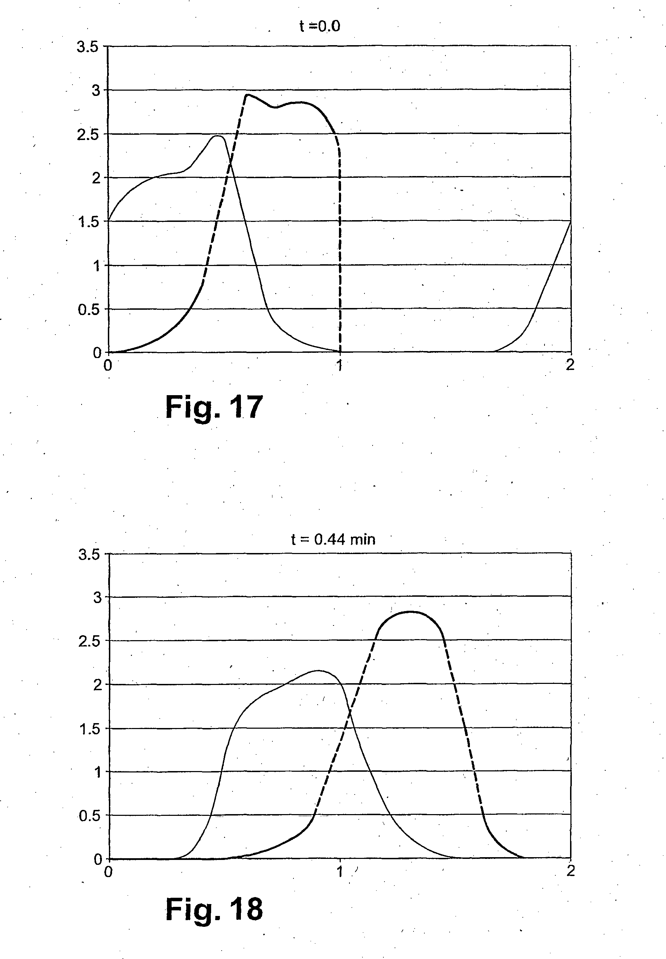

Des exemples de réalisation vont être donnés en relation avec des figures 17 à 26. Sur ces figures, les abscisses indiquent le numéro de colonne, les ordonnées indiquant la concentration des composés en g/l. La courbe en gras et pointillés indique la courbe de raffinat, l'autre courbe indiquant l'extrait.

### Exemple 1

Ce procédé a également été validé par simulation pour la purification de 1,2,3,4-tetra-1-hydronaphthol sur phase chiralpak AD 20µm utilisant un éluant de composition n-Heptane/2-propanol/acide trifluoroacétique 95/5/0.2 (v/v/v). La publication de Ludemann, Nicoud et Bailly dans Séparation Science and technology, 35(12), pp 1829-1862, 2000 donne tous les paramètres nécessaires à la simulation de procédé.

Les grandeurs utilisées pour la simulation sont :
- 2 colonnes de 1 cm de diamètre interne et 10 cm de long ;
- la température est de 25°C;
- Débit d'éluant de 22 mL/min, sauf lorsque la charge est injectée, le débit d'éluant est alors nul ;
- Une charge composée du racémique dissout dans l'éluant à une concentration totale de 20g/L, cette charge est injectée à un débit de 4mL/min pendant 0.1 minute ;
- La période utilisée est de 0.98 minutes, la durée du cycle est de deux périodes soit 1.96 minutes.

En simulant la séquence suivante, répétée de façon cyclique, en se reportant aux figures 1 et 2 :

| Intervalle de temps dans le cycle (minutes) | Position de la ligne d'éluant | Position de la ligne de charge | Collecte de l'extrait | Collecte du raffinat |
|---|---|---|---|---|
| 0.00 à 0.44 | 211 | | 222 | |
| 0.44 à 0.54 | 211 | 221 | 222 | |
| 0.54 à 0.59 | 211 | | 222 | |
| 0.59 à 0.98 | 211 | | | 222 |
| 0.98 à 1.42 | 221 | | 212 | |
| 1.42 à 1.52 | 221 | 211 | 212 | |
| 1.52 à 1.57 | 221 | | 212 | |
| 1.57 à 1.96 | 221 | | | 212 |

Les puretés calculées sont supérieures à 98% pour chacune des deux collectes.

Les figures 17 à 21 présentent l'évolution du profil interne de concentration simulé sur une période selon le montage décrit sur la figure 1 après un temps de fonctionnement suffisant permettant d'atteindre un régime de fonctionnement établi.

La figure 17 montre le profil interne de concentration au temps t = 0.00 soit le début de collecte de l'extrait.

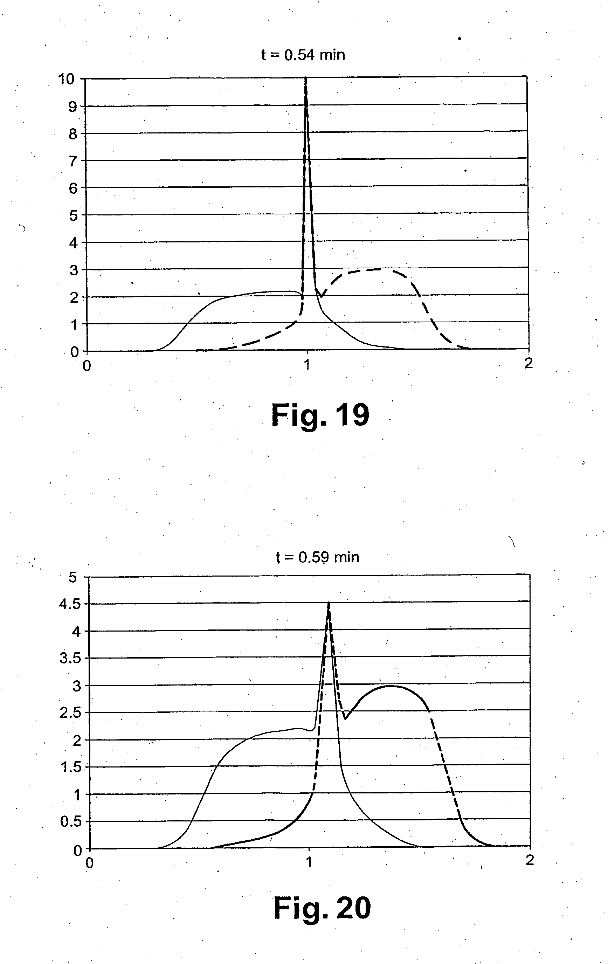

Les figures 18 et 19 montrent les profils internes de concentration aux temps t = 0.44 minute et 0.54 minute respectivement le début et la fin de l'injection.

La figure 20 montre le profil interne de concentration au temps t = 0.59 minute soit la fin de collecte de l'extrait et le début de la collecte du raffinat.

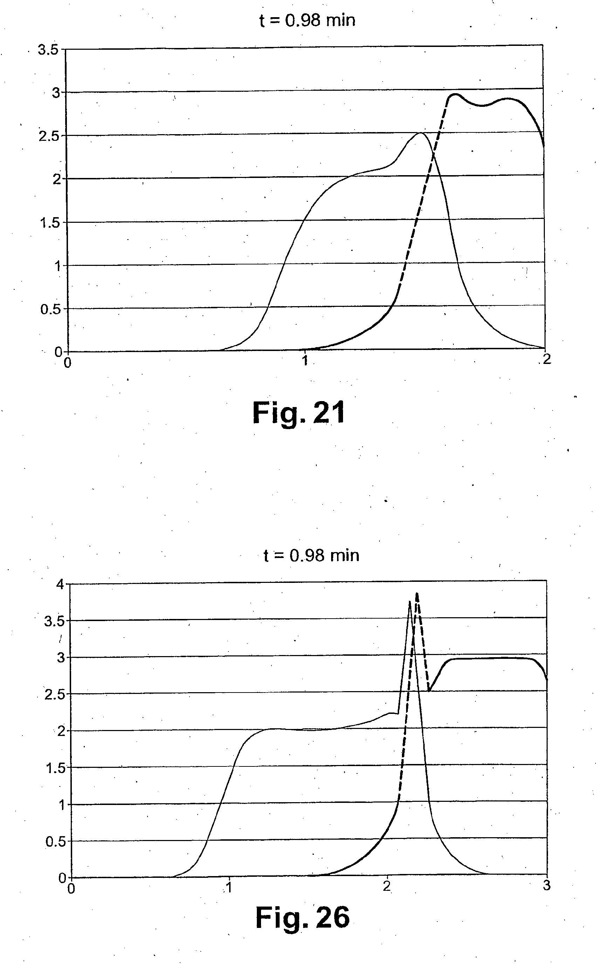

La figure 21 montre le profil interne de concentration au temps t = 0.98 minute soit la fin de collecte de raffinat.

Au temps t = 0.98 minute il y a décalage du point d'injection de l'éluant et du point de collecte, comme indiqué sur le tableau ci-dessus.

Sur les figures 17 et 21 il apparaît nettement que les profils internes de concentrations s'étalent sur largement plus d'une colonne à la différence du procédé cyclojet à deux colonnes qui par construction implique qu'une des deux colonnes soit toujours remplie d'éluant. Les présents procédé et dispositif sont moins onéreux.

### Exemple 2

En reprenant les conditions de l'exemple 1 sur trois colonnes le temps de cycle est égal à 2.94 minutes soit trois périodes, en utilisant le séquençage suivant, répété de façon cyclique :
(les colonnes sont numérotées 21, 22, 23, avec pour entrée et sortie respectivement, 21 et 212, 221 et 222, 231 et 232)

| Intervalle de temps dans le cycle (minutes) | Position de la ligne d'éluant | Position de la ligne de charge | Collecte de l'extrait | Collecte du raffinat |
|---|---|---|---|---|
| 0 à 0.59 | 211 | | 232 | |
| 0.59 à 0.78 | 211 | | | 232 |
| 0.78 à 0.88 | 211 | 231 | | 232 |
| 0.88 à 0.98 | 211 | | | 232 |
| 0.98 à 1.57 | 221 | | 212 | |
| 1.57 à 1.76 | 221 | | | 212 |
| 1.76 à 1.86 | 221 | 211 | | 212 |
| 1.86 à 1.96 | 221 | | | 212 |
| 1.96 à 2.55 | 231 | | 222 | |
| 2.55 à 2.74 | 231 | | | 222 |
| 2.74 à 2.84 | 231 | 221 | | 222 |
| 2.84 à 2.94 | 231 | | | 222 |

Les puretés calculées sont supérieures à 99.5% pour chacune des deux collectes.

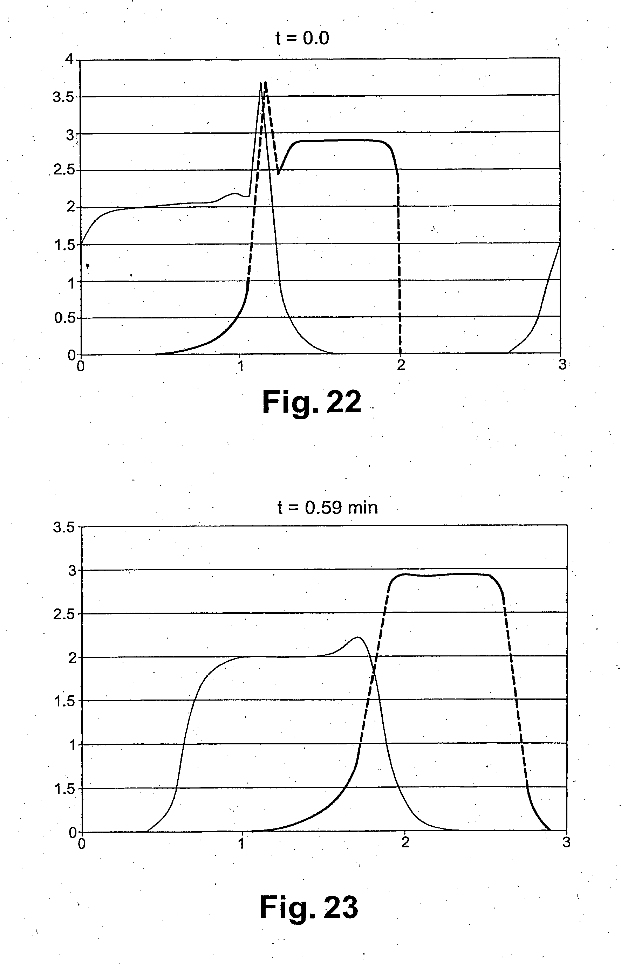

Les figures 22 à 25 présentent l'évolution du profil interne de concentration simulé sur une période après un temps de fonctionnement suffisant permettant d'atteindre un régime de fonctionnement établi.

La figure 22 montre le profil interne de concentration au temps t = 0.00 minute soit le début de collecte de l'extrait.

La figure 23 montre le profil interne de concentration au temps t = 0.59 minute soit la fin de collecte de l'extrait et le début de collecte du raffinat.

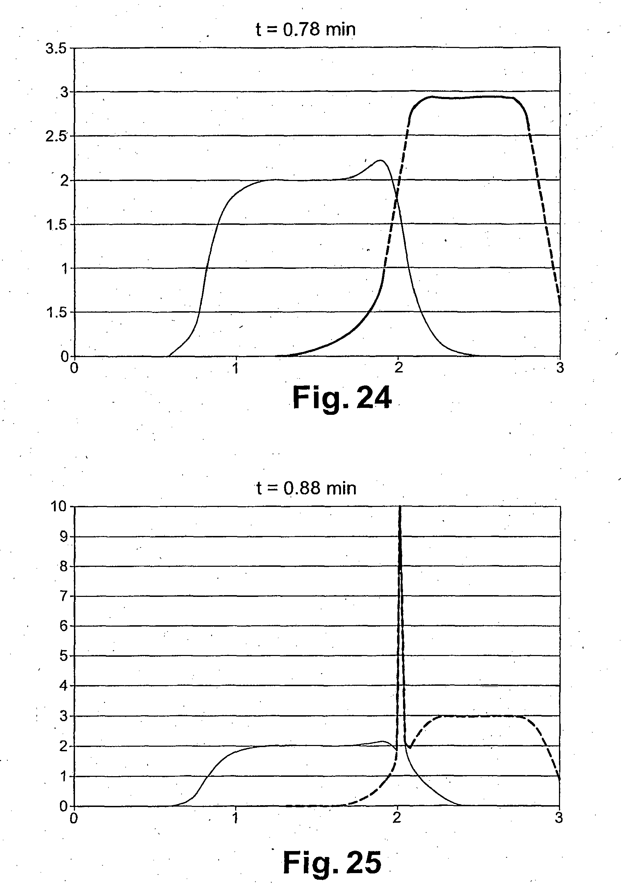

Les figures 24 et 25 montrent le profil interne de concentration aux temps t = 0.78 minute et 0.88 minute soient les temps de début et de fin d'injection de la charge.

La figure 26 montre le profil interne de concentration au temps t = 0.98 minute soit la fin de collecte du raffinat.

Au temps t = 0.98 minute il y a décalage du point d'injection de l'éluant et du point de collecte, comme indiqué sur le tableau ci-dessus.

Les figures 22 à 25 montrent que les profils de concentration internes sont étalés sur une grande partie de la boucle de séparation. En observant les figures 17 à 25, il apparaît que ce procédé permet d'exploiter une grande partie des colonnes utilisées dans la boucle de séparation. Ainsi, dans l'exemple 1, deux colonnes constituaient la zone de séparation et les profils internes de concentrations occupaient constamment entre 1.25 et 1.5 colonnes alors que dans l'exemple 2, trois colonnes constituent la zone de séparation et les profils internes de concentrations occupaient constamment entre 2.25 et 2.5 colonnes.

### Exemple 3

Ce procédé a été testé expérimentalement sur un dispositif de trois colonnes. Les colonnes de 2.6 cm de diamètre interne ont été remplies sur une hauteur de 11.2 cm en moyenne par de la phrase inverse C18 Kromasil 25µm. l'éluant utilisé est un tampon 3,81g/L de Na2B4O7,10H2O dans de l'eau mélangé à de l'éthanol en proportion volumique respective 70 / 30 à 22°C. Le mélange à traité est obtenu en diluant 1g de bleu patenté et 1g d'azorubine (produit rouge) dans l'éluant. La charge ainsi préparée est foncée, de couleur violette.

Le débit de la première ligne d'éluant est de 20 mL/min, le débit de la première ligne d'éluant est nul lorsque la charge est injectée. Le débit de la seconde ligne d'éluant est égal à 20mL/min, lorsque le système est en situation de colonne décalée et nul sinon.

Les colonnes sont numérotées 21, 22, 23, avec pour entrée et sortie respectivement, 211 et 212, 221 et 222, 231 et 232.

Le séquençage mis en place pour chaque cycle est :

| Intervalle de temps dans le cycle (minute) | Position de la ligne d'éluant 2 | Collecte du bleu sortie 2 | Position de la ligne d'éluant 1 | Position de la ligne de charge | Collecte du bleu sortie 1 | Collecte du rouge sortie 1 |
|---|---|---|---|---|---|---|
| 0.00 à 0.08 | 211 | 212 | 221 | 231 | | 232 |
| 0.08 à 0.94 | 211 | 212 | 221 | | | 232 |
| 0.94 à 1.82 | | | 221 | | 212 | |
| 1.82 à 1.89 | | | 221 | 211 | 212 | |
| 1.89 à 1.97 | 221 | 222 | 231 | 211 | | 212 |
| 1.97 à 2.83 | 221 | 222 | 231 | | | 212 |
| 2.83 à 3.71 | | | 231 | | 222 | |
| 3.71 à 3.78 | | | 231 | 221 | 222 | |
| 3.78 à 3.86 | 231 | 232 | 211 | 221 | | 222 |
| 3.86 à 4.72 | 231 | 232 | 211 | | | 222 |
| 4.72 à 5.60 | | | 211 | | 232 | |
| 5.60 à 5.67 | | | 211 | 231 | 232 | |

Au bout de quelques cycles, il a été obtenu une collecte bleue et une collecte rouge, signe visible d'une séparation significative des deux produits.

## Revendications

1. Un procédé de séparation de fractions d'un mélange à séparer, dans un dispositif (1) présentant :
- plusieurs colonnes (21, 22, 23, ...) de chromatographie montées en série,
- une boucle de séparation ouverte et comprenant en entrée un point d'injection (6) d'éluant dans une des colonnes et en sortie un point de soutirage (8) de fraction du mélange, le procédé comprenant des étapes de :
- injection discontinue du mélange à séparer dans la boucle de séparation (4) ouverte,
- collecte d'au moins deux fractions,
- décalage d'au moins une colonne des points d'injection d'éluant et de soutirage de fraction (6, 8) de la boucle de séparation (4).

2. Le procédé selon la revendication 1, dans lequel au moins deux fractions sont collectées successivement au point de collecte de la boucle de séparation.

3. Le procédé selon l'une des revendications précédentes, le dispositif comprenant deux colonnes en série,
- l'entrée de la boucle de séparation étant à l'entrée d'une des colonnes et
- la sortie de la boucle de séparation étant à la sortie de l'autre colonne,
l'étape de collecte comprenant la collecte de deux fractions au point de soutirage en sortie de la boucle de séparation, l'une des fractions, l'extrait, étant plus retenue dans les colonnes que l'autre fraction, le raffinat, moins retenue dans les colonnes.

4. Le procédé selon l'une des revendications 1 à 3, dans lequel, au cours de l'étape de décalage, les points d'injection d'éluant et de soutirage de la boucle de séparation sont décalés à des temps différents.

5. Le procédé selon l'une des revendications précédentes, dans lequel, au cours de l'étape de décalage,
- le point d'injection d'éluant de la boucle de séparation est décalé d'au moins une colonne vers le point de soutirage de la boucle de séparation, dans la direction d'écoulement du mélange à séparer dans les colonnes, au moins une colonne demeurant entré le point d'injection et le point de soutirage.

6. Le procédé selon l'une des revendications précédentes, le dispositif comprenant en outre
- au moins une autre boucle, chaque autre boucle étant ouverte et comprenant en entrée un autre point d'injection d'éluant et en sortie un autre point de collecte,
le procédé comprenant, après le décalage du point d'injection d'éluant de la boucle de séparation d'au moins une colonne,
- le décalage d'au moins une colonne du point de soutirage d'une des autres boucles.

7. Le procédé selon l'une des revendications précédentes, dans lequel, après le décalage du point d'injection d'éluant de la boucle de séparation d'au moins une colonne,
- au moins une autre boucle apparaît avec au moins une colonne décalée, chaque autre boucle apparue étant ouverte et comprenant en entrée un autre point d'injection et en sortie un autre point de soutirage.

8. Le procédé selon l'une des revendications précédentes, dans lequel chaque boucle est éluée avec des éluants de nature ou de compositions différentes.

9. Le procédé selon l'une des revendications précédentes, dans lequel, au cours de l'étape de décalage,
- les points d'injection d'éluant et de soutirage de la boucle de séparation sont décalés simultanément.

10. Le procédé selon l'une des revendications précédentes, dans lequel chaque boucle autre que la boucle de séparation (4) assure la désorption des fractions de mélange les plus retenues dans les colonnes ou la régénération des colonnes.

11. Le procédé selon l'une des revendications précédentes, dans lequel l'injection est seulement effectuée au cours de certaines périodes.

12. Le procédé selon l'une des revendications précédentes selon lequel l'éluant utilisé est un fluide monophasique constitué d'au moins un produit gazeux à pression et température ambiante.

13. Le procédé selon l'une des revendications précédentes selon lequel l'éluant utilisé est un fluide contenant au moins du dioxyde de carbone à l'état supercritique.

14. Un dispositif comprenant
- plusieurs colonnes de chromatographie montées en série,
- une boucle de séparation ouverte comprenant en entrée un point d'injection (6) d'éluant dans une des colonnes et en sortie un point de soutirage (8) de fraction d'un mélange à séparer, ainsi qu'un point d'injection (10) de mélange,
- une commande adaptée à injecter de manière discontinue un mélange à séparer dans la boucle ouverte et à décaler d'au moins une colonne les positions des points d'injection et de soutirage (6, 8).

15. Le dispositif selon la revendication 14, comprenant en outre, entre le point de soutirage et le point d'injection d'éluant de la boucle de séparation (4), au moins une autre boucle, chaque autre boucle étant ouverte et comprenant en entrée un point d'injection d'éluant et en sortie un point de soutirage.

16. Le dispositif selon l'une des revendications 14 ou 15, comprenant une pompe pour l'injection de la charge et autant de pompes qu'il y a d'éluants.

17. Le dispositif selon l'une des revendications 14 à 16, dans lequel une pompe est intercalée entre au moins deux des colonnes du dispositif.

18. Le dispositif selon l'une des revendications 14 à 17, dans lequel une pompe est intercalée entre chaque colonne.

19. Utilisation du dispositif selon l'une des revendications 14 à 18, pour la mise en oeuvre du procédé selon l'une des revendications précédentes.

## Patentansprüche

1. Verfahren zur Trennung von Fraktionen eines zu trennenden Gemischs in einer Vorrichtung (1), die Folgendes aufweist:
- mehrere in Reihe geschaltete Chromatographiesäulen (21, 22, 23, ...),
- einen Trennkreislauf, der offen ist und am Einlass eine Stelle (6) zur Injektion von Eluent in eine der Säulen und am Auslass eine Stelle (8) zur Entnahme einer Fraktion des Gemischs umfasst, wobei das Verfahren die folgenden Schritte umfasst:
- diskontinuierliches Injizieren des zu trennenden Gemischs in den offenen Trennkreislauf (4),
- Sammeln von mindestens zwei Fraktionen,
- Verlagern der Stellen (6, 8) zur Injektion von Eluent und zur Entnahme einer Fraktion des Trennkreislaufs (4) um mindestens eine Säule.

2. Verfahren nach Anspruch 1, wobei mindestens zwei Fraktionen nacheinander an der Sammelstelle des Trennkreislaufs gesammelt werden.

3. Verfahren nach einem der vorhergehenden Ansprüche, wobei
- die Vorrichtung zwei Säulen in Reihe umfasst,
- der Einlass des Trennkreislaufs sich am Einlass einer der Säulen befindet und
- der Auslass des Trennkreislaufs sich am Auslass der anderen Säule befindet,
der Sammelschritt das Sammeln von zwei Fraktionen an der Entnahmestelle am Auslass des Trennkreislaufs umfasst, wobei eine der Fraktionen, das Extrakt, länger in den Säulen gehalten wird als die andere Fraktion, das Raffinat, die kürzer in den Säulen gehalten wird.

4. Verfahren nach einem der Ansprüche 1 bis 3, wobei im Verlauf des Verlagerungsschritts die Stellen zur Injektion von Eluent und zur Entnahme des Trennkreislaufs zu unterschiedlichen Zeiten verlagert werden.

5. Verfahren nach einem der vorhergehenden Ansprüche, wobei im Verlauf des Verlagerungsschritts
- die Stelle zur Injektion von Eluent des Trennkreislaufs um mindestens eine Säule zu der Stelle zur Entnahme des Trennkreislaufs hin in der Richtung des Flusses des zu trennenden Gemischs in den Säulen verlagert wird, wobei mindestens eine Säule zwischen der Injektionsstelle und der Entnahmestelle bestehen bleibt.

6. Verfahren nach einem der vorhergehenden Ansprüche, wobei die Vorrichtung außerdem Folgendes umfasst:
- mindestens einen anderen Kreislauf, wobei jeder andere Kreislauf offen ist und am Einlass eine andere Stelle zur Injektion von Eluent und am Auslass eine andere Sammelstelle umfasst,
wobei das Verfahren nach der Verlagerung der Stelle zur Injektion von Eluent des Trennkreislaufs mindestens eine Säule umfasst,
- die Verlagerung der Entnahmestelle von einem der anderen Kreisläufe um mindestens eine Säule.

7. Verfahren nach einem der vorhergehenden Ansprüche, wobei nach der Verlagerung der Stelle zur Injektion von Eluent des Trennkreislaufs um mindestens eine Säule
- mindestens ein anderer Kreislauf mit mindestens einer verlagerten Säule auftritt, wobei jeder auftretende andere Kreislauf offen ist und am Einlass eine andere Injektionsstelle und am Auslass eine andere Entnahmestelle umfasst.

8. Verfahren nach einem der vorhergehenden Ansprüche, wobei jeder Kreislauf mit Eluenten unterschiedlicher Beschaffenheit oder mit unterschiedlichen Zusammensetzungen eluiert wird.

9. Verfahren nach einem der vorhergehenden Ansprüche, wobei im Verlauf des Verlagerungsschritts
- die Stellen zur Injektion von Eluent und zur Entnahme des Trennkreislaufs gleichzeitig verlagert werden.

10. Verfahren nach einem der vorhergehenden Ansprüche, wobei jeder andere Kreislauf, bei dem es sich nicht um den Trennkreislauf (4) handelt, die Desorption von Gemischsfraktionen, die am längsten in den Säulen gehalten werden, oder die Regeneration von Säulen sicherstellt.

11. Verfahren nach einem der vorhergehenden Ansprüche, wobei die Injektion nur im Verlauf bestimmter Zeitspannen vorgenommen wird.

12. Verfahren nach einem der vorhergehenden Ansprüche, wobei der verwendete Eluent ein einphasiges Fluid ist, das aus mindestens einem bei Umgebungsdruck und - temperatur gasförmigen Produkt besteht.

13. Verfahren nach einem der vorhergehenden Ansprüche, wobei der verwendete Eluent ein Fluid ist, das mindestens Kohlendioxid im superkritischen Zustand enthält.

14. Vorrichtung, die Folgendes umfasst:
- mehrere in Reihe geschaltete Chromatographiesäulen,
- einen offenen Trennkreislauf, der am Einlass eine Stelle (6) zur Injektion von Eluent in einer der Säulen und am Auslass eine Stelle (8) zur Entnahme einer Fraktion eines zu trennenden Gemischs sowie eine Stelle (10) zur Injektion eines Gemischs umfasst,
- eine Steuerung, die zum diskontinuierlichen Injizieren eines zu trennenden Gemischs in den offenen Kreislauf und zum Verlagern der Positionen von Injektions- und Entnahmestellen (6, 8) um mindestens eine Säule eingerichtet ist.

15. Vorrichtung nach Anspruch 14, die außerdem zwischen der Entnahmestelle und der Stelle zur Injektion von Eluent des Trennkreislaufs (4) mindestens einen anderen Kreislauf umfasst, wobei jeder andere Kreislauf offen ist und am Einlass eine Stelle zur Injektion von Eluent und am Auslass eine Entnahmestelle umfasst.

16. Vorrichtung nach einem der Ansprüche 14 oder 15, die eine Pumpe zur Injektion des Füllmaterials und so viele Pumpen, wie es Eluenten gibt, umfasst.

17. Vorrichtung nach einem der Ansprüche 14 bis 16, wobei eine Pumpe zwischen mindestens zwei Säulen der Vorrichtung eingeschoben ist.

18. Vorrichtung nach einem der Ansprüche 14 bis 17, wobei eine Pumpe zwischen jeder Säule eingeschoben ist.

19. Verwendung der Vorrichtung nach einem der Ansprüche 14 bis 18 zur Durchführung des Verfahrens nach einem der vorhergehenden Ansprüche.

## Claims

1. A method for separating fractions of a mixture to be separated, in a device (1) having:
- several chromatography columns (21, 22, 23, ...) mounted in series,
- an open separation loop and comprising at the inlet a point (6) for injecting eluent into one of the columns and at the outlet a draw-off point (8) for a fraction of the mixture, the method comprising steps of:
- discontinuous injection of the mixture to be separated into the open separation loop (4),
- collection of at least two fractions,
- shifting by at least one column the eluent-injection and fraction draw-off points (6, 8) of the separation loop (4).

2. The method according to claim 1, in which at least two fractions are collected successively at the collection point of the separation loop.

3. The method according to one of the preceding claims, the device comprising two columns in series,
- the inlet of separation loop being at the inlet of one of the columns and
- the outlet of the separation loop being at the outlet of the other column, the collection step comprising the collection of two fractions at the draw-off point at the outlet of the separation loop, one of the fractions, the extract, being more retained in the columns than the other fraction, the raffinate, which is less retained in the columns.

4. The method according to one of claims 1 to 3, in which, during the shifting step, the eluent-injection and draw-off points of the separation loop are shifted at different times.

5. The method according to one of the preceding claims, in which, during the shifting step,
- the eluent-injection point of the separation loop is shifted by at least one column towards the draw-off point of the separation loop, in the direction of flow of the mixture to be separated in the columns, at least one column remaining between the injection point and the draw-off point.

6. The method according to one of the preceding claims, the device also comprising.
- at least one other loop, every other loop being open and comprising at the inlet another eluent-injection point and at the outlet another collection point, the method comprising, after shifting the eluent-injection point of the separation loop by at least one column,
- the shifting by at least one column of the draw-off point of one of the other loops.

7. The method according to one of the preceding claims, in which, after the shifting of the eluent-injection point of the separation loop by at least one column,
- at least one other loop appears with at least one shifted column, every other loop having appeared being open and comprising at the inlet another injection point and at the outlet another draw-off point.

8. The method according to one of the preceding claims, in which each loop is eluted with eluants of a different kind or of different compositions.

9. The method according to one of the preceding claims, in which, during the shifting step,
- the eluent-injection and draw-off points of the separation loop are shifted simultaneously.

10. The method according to one of the preceding claims, in which each loop other than the separation loop (4) ensures the desorption of the most-retained fractions of mixture in the columns or the regeneration of the columns.

11. The method according to one of the preceding claims, in which the injection is only carried out during certain periods.

12. The method according to one of the preceding claims in which the eluent employed is a single-phase fluid constituted by at least one gaseous product at ambient temperature and pressure.

13. The method according to one of the preceding claims in which the eluent employed is a fluid containing at least carbon dioxide in a supercritical state.

14. A device comprising
- several chromatography columns mounted in series,
- an open separation loop comprising at the inlet a point (6) for injecting eluent into one of the columns and at the outlet a draw-off point (8) for a fraction of a mixture to be separated, as well as a mixture-injection point (10),
- a control suited to the discontinuous injection of a mixture to be separated into the open loop and to shifting by at least one column the positions of the injection and draw-off points (6, 8).

15. The device according to claim 14, also comprising, between the draw-off point and the eluent-injection point of the separation loop (4), at least one other loop, every other loop being open and comprising at the inlet an eluent-injection point and at the outlet a draw-off point.

16. The device according to one of claims 14 or 15, comprising a pump for the injection of the feedstock and as many pumps as there are eluents.

17. The device according to one of claims 14 to 16, in which a pump is inserted between at least two of the columns of the device.

18. The device according to one of claims 14 to 17, in which a pump is inserted between each column.

19. Use of the device according to one of claims 14 to 18, for the implementation of the method according to one of the preceding claims.
